(19) Europäisches Patentamt
European Patent Office
Office européen des brevets

(11) EP 3 988 619 A1

# (12) EUROPEAN PATENT APPLICATION

published in accordance with Art. 153(4) EPC

(43) Date of publication:
**27.04.2022 Bulletin 2022/17**

(21) Application number: **20810673.2**

(22) Date of filing: **19.05.2020**

(51) International Patent Classification (IPC):
***C09B 29/085*** (2006.01) ***D06P 1/04*** (2006.01)
***D06P 1/18*** (2006.01) ***D06P 5/24*** (2006.01)
***D06P 5/26*** (2006.01) ***C09B 67/20*** (2006.01)
***C09B 67/22*** (2006.01) ***C09B 67/44*** (2006.01)
***C09B 67/46*** (2006.01)

(52) Cooperative Patent Classification (CPC):
**D06P 1/04; D06P 1/18**

(86) International application number:
**PCT/JP2020/019782**

(87) International publication number:
**WO 2020/235560 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.05.2019 JP 2019097007**
**19.07.2019 JP 2019133209**

(71) Applicant: **Nippon Kayaku Kabushiki Kaisha**
**Tokyo 100-0005 (JP)**

(72) Inventors:
- **MATSUMOTO Takahiro**
**Tokyo 115-8588 (JP)**
- **HAGIWARA Yuta**
**Tokyo 115-8588 (JP)**
- **MIYAZAWA Yoshimasa**
**Tokyo 115-8588 (JP)**
- **TANAKA Yuki**
**Tokyo 115-8588 (JP)**

(74) Representative: **Parchmann, Stefanie**
**Maiwald Patentanwalts- und Rechtsanwaltsgesellschaft mbH**
**Elisenhof**
**Elisenstraße 3**
**80335 München (DE)**

## (54) COLORED DISPERSION, RECORDING MEDIUM, AND TEXTILE PRINTING METHOD FOR HYDROPHOBIC FIBERS

(57) Provided is a colored dispersion that contains (A) C.I. Disperse Orange 25, (B) a specific dye such as C.I. Disperse Orange 49, 62, 71, 73, or 148, and water. When the total (A) C.I. Disperse Orange 25 and (B) specific dye content of the colored dispersion is 100 parts by mass, the (B) specific dye content of the colored dispersion is less than 20 parts by mass. Also provided are a recording medium to which the colored dispersion has been adhered and a textile printing method for hydrophobic fibers that uses the colored dispersion.



Processed by Luminess, 75001 PARIS (FR)

## Description

TECHNICAL FIELD

The present invention relates to a colored dispersion liquid, a recording medium to which the colored dispersion liquid is adhered, and a method for textile printing of a hydrophobic fiber using the colored dispersion liquid.

BACKGROUND ART

In recent years, there has been proposed a recording method for performing plate-less printing by inkjet, and textile printing by inkjet printing (inkjet textile printing) has also been performed in the printing of fibers including cloth, etc. Textile printing by inkjet printing has various advantages such as plate-free, resource saving, energy saving, and easy high-definition expression, compared to conventional textile printing methods such as screen printing, etc.

Here, hydrophobic fibers typified by polyester fibers are generally dyed by a water-insoluble coloring material. For this reason, as an aqueous ink for printing of hydrophobic fibers by inkjet printing, it is generally necessary to use dispersed inks, in which a water-insoluble coloring matter is dispersed in water, and which have good performance such as dispersion stability.

Inkjet textile printing methods for hydrophobic fibers are roughly divided into direct printing and sublimation transfer methods. The direct printing method is a textile printing method in which ink is directly applied (printed) to a hydrophobic fiber, and then a dye in the ink is heat treated by high temperature steaming or the like, so that the dye is dyed and fixed to the hydrophobic fiber. On the other hand, the sublimation transfer method is a textile printing method in which ink is applied (printed) to an intermediate recording medium (a special transfer paper, etc.), then an ink application surface of the intermediate recording medium and a hydrophobic fiber are superimposed on each other, and then a dye is transferred by heat from the intermediate recording medium to the hydrophobic fiber.

The sublimation transfer method is mainly used for printing of banner flags, etc. and easily sublimating dyes which are excellent in transferability to hydrophobic fibers by heat treatment are used in the ink. The processing steps include the two steps of (1) a printing step: a step of applying a dye ink to an intermediate recording medium by an inkjet printer; and (2) a transfer step: a step of transferring and dyeing the dye from the intermediate recording medium to the fiber by heat treatment. Since commercially available transfer papers can be widely used, pretreatment of fibers is not required, and a washing step is also omitted.

As an ink for use in the sublimation transfer method, an aqueous ink in which a water-insoluble dye is dispersed in water has been generally used. For example, Patent Document 1 describes that an aqueous ink is prepared by adding a water-soluble organic solvent as a moisturizing agent (drying inhibitor), a surfactant as a surface tension adjusting agent, and other additives (a pH adjuster, a preservative antifungal agent, a defoaming agent, and the like) to a dye dispersion liquid obtained by dispersing a water-insoluble dye selected from a disperse dye and an oil-soluble dye in water using a dispersant, to optimize physical characteristics (physical properties) such as particle size, viscosity, surface tension, pH, etc.

Patent Document 1: PCT International Publication No.2005/121263

DISCLOSURE OF THE INVENTION

Problems to be Solved by the Invention

However, when the present inventors have studied a conventional aqueous ink in which a water-insoluble dye is dispersed in water, it has been found that, even when the dispersion stability of the dye dispersion is relatively good, when a component such as a surfactant is added to the dye dispersion to prepare an aqueous ink, the particles in the aqueous ink aggregate and the dispersion stability decreases.

It is an object of the present invention to provide a colored dispersion liquid which is excellent in dispersion stability and suppresses aggregation of particles during storage, a recording medium to which the colored dispersion liquid is adhered, and a method for textile printing of a hydrophobic fiber using the colored dispersion liquid.

Means for Solving the Problems

Specific means for solving the above problem include the following embodiments.

A first aspect of the present invention relates to a colored dispersion liquid, containing: (A) C.I. Disperse Orange 25, (B) at least one coloring matter selected from a coloring matter represented by the following formula (1) and a coloring matter represented by the following formula (2), and water,

in which a content of the (B) coloring matter is less than 20 parts by mass, when a total content of the (A) C.I. Disperse Orange 25 and the (B) coloring matter is 100 parts by mass,
in which the formula (1) is

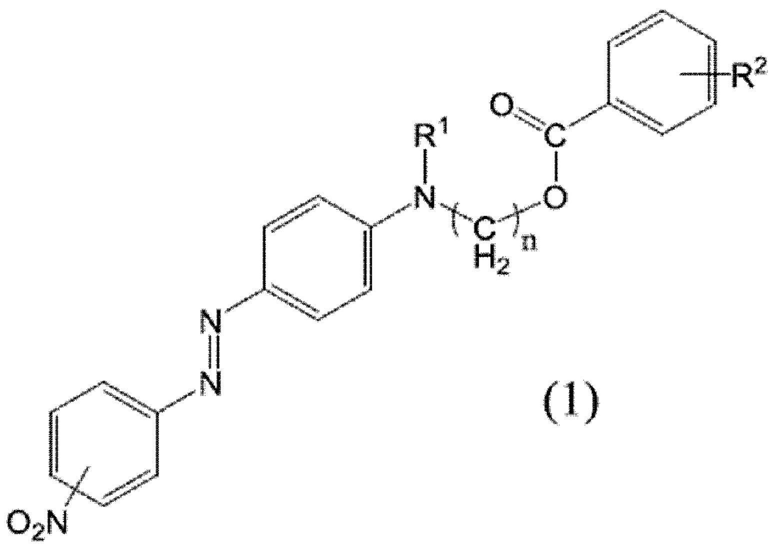

(1)

in the formula (1), $R^1$ and $R^2$ each independently represent a hydrogen atom, a C1 to C7 alkyl group which may have a substituent, and n is an integer of 1 to 7, and
the formula (2) is

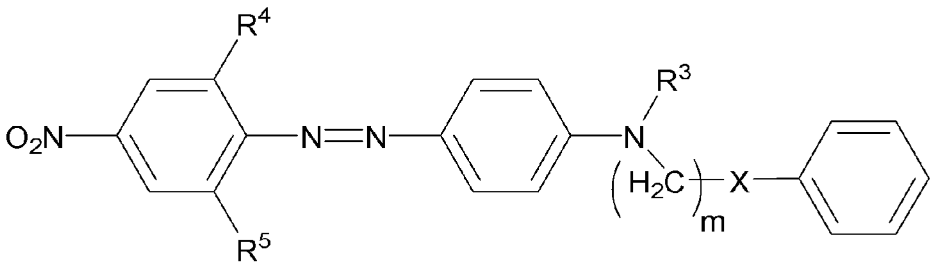

(2)

in the formula (2), $R^3$ represents a hydrogen atom or a C1 to C7 alkyl group which may have a substituent, $R^4$ and $R^5$ each independently represent a hydrogen atom or a halogen atom, X represents an oxygen atom, -OCONH-, -OCO-, or $-OCOCH_2-$, and m represents an integer of 1 to 7.

A second aspect of the present invention relates to the colored dispersion liquid as described in the first aspect, in which the content of the (B) coloring matter is 0.1 to 15 parts by mass, when the total content of the (A) C.I. Disperse Orange 25 and the (B) coloring matter is 100 parts by mass.

A third aspect of the present invention relates to the colored dispersion liquid as described in the first aspect, in which the content of the (B) coloring matter is 0.5 to 5 parts by mass, when the total content of the (A) C.I. Disperse Orange 25 and the (B) coloring matter is 100 parts by mass.

A fourth aspect of the present invention relates to the colored dispersion liquid as described in any one of the first to third aspects, in which the coloring matter represented by the formula (1) is C.I. Disperse Orange 73.

A fifth aspect of the present invention relates to the colored dispersion liquid as described in any one of the first to fourth aspects, further containing a dispersant.

A sixth aspect of the present invention relates to the colored dispersion liquid as described in the fifth aspect, in which the dispersant includes at least one selected from the group consisting of a styrene-(meth)acrylic copolymer, a formalin condensate of an aromatic sulfonic acid or a salt thereof, polyoxyethylene arylphenyl ether, polyoxyethylene arylphenyl ether sulfate, and polyoxyethylene naphthyl ether.

A seventh aspect of the present invention relates to the colored dispersion liquid as described in the sixth aspect, in which the formalin condensate of an aromatic sulfonic acid or a salt thereof includes a formalin condensate of sodium naphthalene sulfonate or a salt thereof.

An eighth aspect of the present invention relates to the colored dispersion liquid as described in the sixth or seventh aspect, in which the formalin condensate of an aromatic sulfonic acid or a salt thereof includes a formalin condensate of creosote oil sulfonic acid or a salt thereof.

A ninth aspect of the present invention relates to the colored dispersion liquid as described in any one of the sixth to eighth aspects, in which the polyoxyethylene arylphenyl ether is polyoxyethylene styrylphenyl ether, and the polyoxyethylene arylphenyl ether sulfate is polyoxyethylene styrylphenyl ether sulfate.

A tenth aspect of the present invention relates to the colored dispersion liquid as described in any one of the sixth to ninth aspects, in which the dispersant further includes a phytosterol compound.

An eleventh aspect of the present invention relates to the colored dispersion liquid as described in any one of the first to eleventh aspects, further containing a yellow dye, a blue dye, and an orange dye different from the A) C.I. Disperse Orange 25 and the (B) coloring matter.

A twelfth aspect of the present invention relates to a recording medium, including the colored dispersion liquid as described in any one of the first to eleventh aspects adhered thereto.

A thirteenth aspect of the present invention relates to the recording medium as described in the twelfth aspect, in which the recording medium is a hydrophobic fiber.

A fourteenth aspect of the present invention relates to a method for textile printing of a hydrophobic fiber, including: printing by adhering a droplet of the colored dispersion liquid as described in any one of the first to eleventh aspects to an intermediate recording medium to obtain a recorded image, and

transferring the recorded image to the hydrophobic fiber by contacting the hydrophobic fiber with a surface of the intermediate recording medium on which the colored dispersion liquid is adhered, followed by heat treatment.

## Effects of the Invention

According to the present invention, it is possible to provide a colored dispersion liquid which is excellent in dispersion stability and in which aggregation of particles during storage is suppressed; a recording medium to which the colored dispersion liquid is adhered; and a method for textile printing of a hydrophobic fiber using the colored dispersion liquid.

## PREFERRED MODE FOR CARRYING OUT THE INVENTION

### <Colored dispersion liquid>

The colored dispersion liquid as described in the present embodiment contains (A) C.I. Disperse Orange 25, (B) at least one coloring matter selected from a coloring matter represented by the above formula (1) and a coloring matter represented by the above formula (2), and water. "C.I." is an abbreviation of color index. Below, the components contained in the colored dispersion as described in the present embodiment are described.

### [Colorant]

The colored dispersion liquid according to the present invention contains, as a colorant, (A) C.I. Disperse Orange 25, (B) at least one coloring matter selected from a coloring matter represented by the above formula (1) and a coloring matter represented by the above formula (2), and a content of the (B) coloring matter is less than 20 parts by mass, when the total content of the (A) C.I. Disperse Orange 25 and the (B) coloring matter is 100 parts by mass. A dispersion state of particles in the colored dispersion liquid tends to be stabilized by such a colored dispersion liquid. The content of the (B) coloring matter is preferably 0.1 to 15 parts by mass, more preferably 0.1 to 10 parts by mass, and most preferably 0.5 to 5 parts by mass, when the total content of the (A) C.I. Disperse Orange 25 and the (B) coloring matter is 100 parts by mass.

In the above formula (a1), $R^1$ and $R^2$ each independently represent a hydrogen atom or a C1 to C7 alkyl group which may have a substituent.

Examples of the C1 to C7 alkyl group include linear chain alkyl groups such as a methyl group, an ethyl group, an n-propyl group, an n-butyl group, an n-hexyl group, an n-pentyl group, etc.; branched chain alkyl groups such as an isopropyl group, a sec-butyl group, a tert-butyl group, etc.; cyclic alkyl groups such as a cyclobutyl group, a cyclopentyl group, a cyclohexyl group, etc.; and the like. Among the C1 to C7 alkyl groups, C1 to C4 alkyl groups are preferred, and an ethyl group is more preferred.

Examples of substituents which may be contained in the C1 to C7 alkyl groups include a hydroxy group, a carboxy group, a sulfo group, a phosphate group, a silanol group, a halogen atom, a cyano group, a nitro group, an amino group, an alkoxy group, an aryloxy group, a carbamoyl group, an alkylcarbonyl group, an arylcarbonyl group, an alkylcarboxy group, an arylcarboxy group, a heterocyclic group, an aromatic ring group, and the like, and these substituents may further have any substituent.

Examples of halogen atoms include a fluorine atom, a chlorine atom, a bromine atom, an iodine atom, etc.

Examples of the amino group include an amino group, a methylamino group, an ethylamino group, an n-butylamino group, a phenylamino group, a dimethylamino group, a diethylamino group, a di-n-butylamino group, a diphenylamino group, a dinaphthylamino group, an ethylmethylamino group, a methylphenylamino group, and the like.

Examples of the alkoxy group include a methoxy group, an ethoxy group, an n-butoxy group, a tert-butoxy group, etc.

Examples of the aryloxy group include a phenoxy group, a naphthoxy group, etc.

Examples of the alkylcarbonyl group include an acetyl group, an ethylcarbonyl group, an n-butylcarbonyl group, etc.

Examples of the arylcarbonyl group include a phenylcarbonyl group, a naphthylcarbonyl group, a fluorenocarbonyl group, etc.

Examples of the alkyl carboxy group include a methylcarboxy group, an ethylcarboxy group, an n-butylcarboxy group, etc.

Examples of the arylcarboxy group include a phenylcarboxy group and the like.

As the heterocyclic group, for example, a thiophene group, a furan group, a pyrrole group, a thiazole group, a benzothiazole group, etc. may be mentioned.

Examples of the aromatic ring group include a phenyl group, a naphthyl group, a fluorenyl group, etc.

Among these, a cyanoethyl group is preferred as $R^1$, and a hydrogen atom is preferred as $R^2$.

In the above formula (1), n represents an integer of 1 to 7, and preferably an integer of 1 to 4.

The position at which the benzene ring is substituted with a nitro group in the above formula (1) may be any of the ortho, meta, or para position with respect to the azo binding site.

Among the coloring matters represented by the above formula (1), C.I. Disperse Orange 73 may be mentioned as a preferred coloring matter.

In the above formula (2), $R^3$ represents a hydrogen atom or a C1 to C7 alkyl group which may have a substituent, and $R^4$ and $R^5$ each independently represent a hydrogen atom or a halogen atom, and X represents an oxygen atom, -OCONH-, -OCO-, or - $OCOCH_2$-. Examples of the C1 to C7 alkyl group which may have a substituent and the halogen atom include the groups and atoms described in the above formula (1), respectively.

In the above formula (2), m represents an integer of 1 to 7, and preferably represents an integer of 1 to 4.

Among the coloring matters represented by the above formula (2), C.I. Disperse Orange 49, 62, 71, and 148 may be mentioned as the preferred coloring matter.

As the (B) coloring matter, the coloring matter represented by the above formula (1) is preferred, and C.I. Disperse Orange 73 is more preferred.

A total content of the (A) C.I. Disperse Orange 25 and the (B) coloring matter is preferably 0.1 to 30% by mass, and more preferably 1 to 20% by mass, with respect to the total amount of the colored dispersion liquid.

The colored dispersion liquid as described in the present embodiment may further contain a colorant other than the (A) C.I. Disperse orange 25 and the (B) coloring matter. However, it is preferable that the content of (A) C.I. Disperse Orange 25 is the highest.

The other colorants include, for example, pigments, disperse dyes, oil-soluble dyes, acid dyes, reactive dyes, direct dyes, and the like. Disperse dyes and oil-soluble dyes are preferred, and disperse dyes are more preferred.

Examples of disperse dyes include: C.I. Disperse Yellow 3, 4, 5, 7, 9, 13, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 182, 183, 184, 186, 192, 198, 199, 201, 202, 204, 210, 211, 215, 216, 218, 224, 231, 232, and 241; C.I. Disperse Orange 1, 3, 5, 7, 11, 13, 17, 20, 21, 29, 30, 31, 32, 33, 37, 38, 42, 43, 44, 45, 47, 48, 50, 53, 54, 55, 56, 57, 58, 59, 61, 66, 76, 78, 80, 89, 90, 91, 93, 96, 97, 119, 127, 130, 139, and 142; C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 289, 298, 302, 303, 310, 311, 312, 320, 324, 328, 343, 362, and 364; C.I. Disperse Violet 1, 4, 8, 23, 26, 27, 28, 31, 33, 35, 36, 38, 40, 43, 46, 48, 50, 51, 52, 56, 57, 59, 61, 63, 69, and 77; C.I. Disperse Green 6:1, and 9; C.I. Disperse Brown 1, 2, 4, 9, 13, 19, and 27; C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, 343, 359, and 360; and C.I. Disperse Black 1, 3, 10, and 24. One of these disperse dyes may be used alone or two or more may be used in combination.

Examples of the oil-soluble dyes include: C.I. Solvent Yellow 2, 6, 14, 16, 21, 25, 29, 30, 33, 51, 56, 77, 80,

82, 88, 89, 93, 116, 150, 163, 179, etc.; C.I. Solvent Orange 1, 2, 14, 45, 60, etc.; C.I. Solvent Red 1, 3, 7, 8, 9, 18, 19, 23, 24, 25, 27, 49, 100, 109, 121, 122, 125, 127, 130, 132, 135, 218, 225, 230, etc.; C.I. Solvent Violet 13, etc. ; C.I. Solvent Green 3, etc.; C.I. Solvent Brown 3, 5, etc.; C.I. Solvent Blue, 2, 11, 14, 24, 25, 35, 36, 38, 48, 55, 59, 63, 67, 68, 70, 73, 83, 105, 111, 132, etc.; C.I. Solvent Black 3, 5, 7, 23, 27, 28, 29, 34, etc.; and the like. One of these oil-soluble dyes may be used alone or two or more may be used in combination. Furthermore, the oil-soluble dyes may be used in combination with disperse dyes, etc.

For example, when imparting the coloring dispersion liquid as described in the present embodiment with a black hue, the coloring dispersion liquid as described in the present embodiment may further contain a yellow dye, a blue dye, and an orange dye other than the (A) C.I. Disperse Orange 25 and the (B) coloring matter.

The content of the other colorants is preferably 10% by mass or less, more preferably 8% by mass or less, with respect to the total amount of the colored dispersion liquid.

[Water]

As the water, that having few impurities such as ion-exchanged water, distilled water, ultrapure water, etc. is preferred. Further, water subjected to sterilization treatment may be used.

The content of water in the colored dispersion liquid is appropriately selected depending on the application. The content of water in the colored dispersion liquid is usually from 200 to 8,500 parts by mass per 100 parts by mass of the total of (A) C.I. Disperse Orange 25 and (B) coloring matter.

[Dispersants]

It is preferable that the colorant dispersion liquid as described in the present embodiment further contains a dispersant. As the dispersant, for example, it is preferable to contain at least one type selected from the group consisting of a styrene-(meth)acrylic copolymer, a formalin condensate of an aromatic sulfonic acid or a salt thereof, a polyoxyethylene arylphenyl ether, a polyoxyethylene arylphenyl ether sulfate, and a polyoxyethylene naphthyl ether.

The styrene-(meth)acrylic copolymer is a copolymer of a styrene-based monomer and a (meth)acrylic monomer. Examples of the copolymer include an (a-methyl)styrene-acrylic acid copolymer, an (a-methyl)styrene-acrylic acid-acrylate ester copolymer, an (a-methyl)styrene-methacrylic acid copolymer, an (a-methyl)styrene-methacrylic acid-acrylate ester copolymer, an (a-methyl)styrene-acrylate ester-maleic acid (maleic anhydride) copolymer, an acrylate ester-styrenesulfonic acid copolymer, an (a-methyl)styrene-methacrylsulfonic acid copolymer, etc. Note that the meaning of the term "(meth)acrylic" as used in this specification includes both "acrylic" and "methacrylic". In addition, the meaning of the term "($\alpha$-methyl)styrene" includes both "a-methylstyrene" and "styrene".

The styrene-(meth)acrylic copolymer preferably has a mass average molecular weight of, for example, 1,000 to 20,000, more preferably 2,000 to 19,000, and most preferably 5,000 to 17,000. The mass average molecular weight of the styrene-(meth)acrylic copolymer can be measured by a GPC (gel permeation chromatography) method.

The styrene-(meth)acrylic copolymer preferably has an acid value of, for example, 50 to 250 mgKOH/g, more preferably 100 to 250 mgKOH/g, and most preferably 150 to 250 mgKOH/g. By setting the acid value to 50 mgKOH/g or more, solubility in water is improved, and in addition, the dispersion stabilizing ability tends to be improved. Furthermore, by setting the acid value to 250 mgKOH/g or less, occurrence of bleeding tends to be suppressed in an image after printing, due to an increase in affinity with an aqueous medium. The acid value of a resin represents the number of mg of KOH required to neutralize 1 g of the resin, and can be measured according to JIS-K3054.

The glass transition temperature of the styrene-(meth)acrylic copolymer is, for example, preferably 45 to 135°C, more preferably 55 to 120°C, and most preferably 60 to 110°C.

Examples of commercially available products of the styrene-(meth)acrylic copolymer include Joncryl 67, 678, 680, 682, 683, 690, 52J, 57J, 60J, 63J, 70J, JDX-6180, HPD-196, HPD96J, PDX-6137A, 6610, JDX-6500, JDX-6639, PDX-6102B, PDX-6124 (all of which are manufactured by BASF Co., Ltd.) and the like. Among these, Joncryl 67 (mass average molecular weight: 12,500, acid value: 213 mgKOH/g), 678 (mass average molecular weight: 8,500, acid value: 215 mgKOH/g), 682 (mass average molecular weight: 1,700, acid value: 230 mgKOH/g), 683 (mass average molecular weight: 4,900, acid value: 215 mgKOH/g), and 690 (mass average molecular weight: 16,500, acid value: 240 mgKOH/g) are preferred, and Joncryl 678 is more preferred.

Examples of the formalin condensate of an aromatic sulfonic acid or a salt thereof include a formalin condensate of creosote oil sulfonic acid, cresol sulfonic acid, phenol sulfonic acid, $\beta$-naphthalene sulfonic acid, $\beta$-naphthol sulfonic acid, $\beta$-naphthalene sulfonic acid, benzene sulfonic acid, cresol sulfonic acid, 2-naphthol-6-sulfonic acid, lignin sulfonic acid, or the like, or a salt thereof (such as a sodium salt, a potassium salt, a lithium salt, etc.). Among these, a formalin condensate of creosote oil sulfonic acid, $\beta$-naphthalene sulfonic acid, lignin sulfonic acid, or methylnaphthalene sulfonic acid or a salt thereof is preferred.

The formalin condensate of an aromatic sulfonic acid or a salt thereof may also be obtained as a commercial

product. For example, as the formalin condensate of β-naphthalene sulfonic acid or a salt thereof, Demol N (manufactured by Kao Corporation) and the like can be mentioned. Examples of the formalin condensate of creosote oil sulfonic acid or a salt thereof include Demol C (manufactured by Kao Corporation), Lavelin W Series (manufactured by DKS Co., Ltd.), and the like. Examples of the formalin condensate of special aromatic sulfonic acid or a salt thereof include Demol SN-B (manufactured by Kao Corporation) and the like. Examples of the formalin condensate of methylnaphthalene sulfonic acid or a salt thereof include Lavelin AN-series (manufactured by DKS Co., Ltd.). Among these, Demol N, Lavelin AN series, and Lavelin W series are preferred, Demol N and Lavelin W series are more preferred, and Lavelin W series is most preferred. Examples of the lignin sulfonic acid include Vanillex N, Vanillex RN, Vanillex G, and Pearlex DP (all of which are manufactured by Nippon Paper Industries Co., Ltd.). Among these, Vanillex RN, Vanillex N, and Vanillex G are preferred.

Examples of the polyoxyethylene arylphenyl ethers include styrylphenol compounds such as polyoxyethylene styrylphenyl ether, polyoxyethylene distyrylphenyl ether, polyoxyethylene tristyrylphenyl ether, polyoxyethylene tetrastyrylphenyl ether etc.; benzylphenol compounds such as polyoxyethylene benzylphenyl ether, polyoxyethylene dibenzylphenyl ether, polyoxyethylene tribenzylphenyl ether, etc.; cumylphenol compounds such as polyoxyethylene cumylphenyl ether etc.; polyoxyethylene naphthyl phenyl ether, polyoxyethylene biphenyl ether, and polyoxyethylene phenoxyphenyl ether; and the like.

The repeating number of the polyoxyethylene group in the polyoxyethylene arylphenyl ether is preferably 1 to 30, and more preferably 15 to 30. When the repeating number is 1 or more, compatibility with an aqueous solvent or the like tends to be excellent. Further, when the repeating number is 30 or less, the viscosity tends not to be too high.

Among the polyoxyethylene arylphenyl ethers, polyoxyethyelene stylylphenyl ether is preferred. As a commercial product of the polyoxyethylene styrylphenyl ether, the following can be mentioned: Pionin D-6112, Pionin D-6115, Pionin D-6120, Pionin D-6131, Pionin D-6512, Takesurf D-6413, DTD-51, Pionin D-6112, and Pionin D-6320 (all of which are manufactured by Takemoto Oil & Fat Co., Ltd.); TS-1500, TS-2000, TS-2600, SM-174N (all of which are manufactured by Toho Chemical Industry Co., Ltd.); Emulgen A60, Emulgen A90, Emulgen A500 (all of which are manufactured by Kao Corporation); and the like.

Examples of the polyoxyethylene arylphenyl ether sulfate include sulfate salts of the above-described polyoxyethylene arylphenyl ethers.

Among the polyoxyethylene arylphenyl ether sulfates, polyoxyethylene styrylphenyl ether sulfate is preferred. Examples of commercially available products of polyoxyethylene styrylphenyl ether sulfates include SM-57, SM-210 (which are both manufactured by Toho Chemical Industry Co., Ltd.) and the like.

Examples of commercially available products of the polyoxyethylene naphthyl ether include Noigen EN series (manufactured by DKS Co., Ltd.), Pionin D-7240 (manufactured by Takemoto Oil and Fat Co., Ltd.), and the like.

The colored dispersion liquid as described in the present embodiment may further contain a conventionally known nonionic dispersant other than the above. As the nonionic dispersant, the following can be mentioned: alkylene oxide adducts of phytosterols, alkylene oxide adducts of cholestanols, polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene alkyl amines, glycerin fatty acid esters, oxyethylene oxypropylene block polymers, and substituted derivatives thereof, etc. Among these, alkylene oxide adducts of phytosterols (also referred to as phytosterol compounds) and alkylene oxide adducts of cholestanols (also referred to as cholestanol compounds) are preferred, and phytosterol compounds are more preferred.

As the alkylene oxide adducts of phytosterols, C2 to C4 alkylene oxide adducts of phytosterols are preferred, and an ethylene oxide adducts are more preferred. The meaning of term "phytosterols" as used in this specification includes both "phytosterols" and "hydrogenated phytosterols". For example, ethylene oxide adducts of phytosterols include ethylene oxide adducts of phytosterols and ethylene oxide adducts of hydrogenated phytosterols.

As the alkylene oxide adducts of cholestanols, C2 to C4 alkylene oxide adducts of cholestanols are preferred, and ethylene oxide adducts are more preferred. The meaning of the term "cholestanols" as used in this specification includes both "cholestanol" and "hydrogenated cholestanol". Examples of the ethylene oxide adduct of cholestanols include an ethylene oxide adduct of cholestanol and an ethylene oxide adduct of hydrogenated cholestanol.

The amount of the alkylene oxide (preferably C2 to C4 alkylene oxide, more preferably ethylene oxide) added per 1 mol of phytosterols or cholestanols is preferably about 10 to 50 mol, and the HLB is preferably about 13 to 20.

Commercially available products of alkylene oxide adducts of phytosterols include, for example, NIKKOL BPS-20, NIKKOL BPS-30 (all of which are ethylene oxide adducts of phytosterols manufactured by Nikko Chemicals Co., Ltd.), NIKKOL BPSH-25 (as above, an ethylene oxide adduct of hydrogenated phytosterol), and the like. Commercially available products of alkylene oxide adducts of cholestanols include NIKKOL DHC-30 (ethylene oxide adduct of cholestanol manufactured by Nikko Chemicals Co., Ltd.) and the like.

One of the dispersants may be used alone or two or more may be used in combination.

The content of the dispersant (C) is preferably 1 to 300% by mass, and more preferably 5 to 120% by mass, with respect to the total amount of the (A) C.I. Disperse Orange 25 and the (B) coloring matter.

[Additives]

The colored dispersion liquid as described in the present embodiment may include additives other than the above. Examples of the additives include a water-soluble organic solvent, a preservative, a surfactant, a pH adjuster, a chelating reagent, a rust inhibitor, a water-soluble ultraviolet absorber, a water-soluble polymer compound, a viscosity modifier, a coloring matter dissolving agent, an antioxidant, a resin emulsion, etc. Among these, it is preferable for the colored dispersion liquid as described in the present embodiment to include at least one selected from the group consisting of a water-soluble organic solvent, a preservative, a surfactant, and a pH adjuster.

The content of the water-soluble organic solvent is preferably 0 to 90% by mass, more preferably 0.01 to 85% by mass, with respect to the total amount of the colored dispersion liquid. Further, the content of the total of the other additives is preferably 0 to 50% by mass, more preferably 0.01 to 10% by mass, with respective to the total amount of the colored dispersion liquid.

Examples of the water-soluble organic solvent include glycol-based solvents, polyhydric alcohols, pyrrolidones, etc. Examples of the glycol-based solvent include glycerin, polyglycerin (#310, #750, #800), diglycerin, triglycerin, tetraglycerin, pentaglycerin, hexaglycerin, heptaglycerin, octaglycerin, nonaglycerin, decaglycerin, undecaglycerin, dodecaglycerin, tridecaglycerin, tetradecaglycerin, etc. Examples of the polyhydric alcohols include C2 to C6 polyhydric alcohols having 2 to 3 alcoholic hydroxy groups; di or tri C2 to C3 alkylene glycols; poly C2 to C3 alkylene glycols having 4 or more repeating units and having a molecular weight of about 20,000 or less, and preferably include liquid polyalkylene glycols, and the like. Examples thereof include ethylene glycol, diethylene glycol, triethylene glycol, propylene glycol, polyethylene glycol, polypropylene glycol, 1,3-propanediol, 1,2-butanediol, thiodiglycol, 1,3-butanediol, 1,4-butanediol, 2,3-butanediol, 3-methyl-1,3-butanediol, 1,2-pentanediol, 1,5-pentanediol, 2-methyl-2,4-pentanediol, 3-methyl-1,5-pentanediol, 1,2-hexanediol, 1,6-hexanediol, glycerin, trimethylolpropane, 1,3-pentanediol, 1,5-pentanediol, and the like. Examples of the pyrrolidone include 2-pyrrolidone, N-methyl-2-pyrrolidone, etc. Further, a compound or the like which is dissolved in water and serves as a wetting agent is also included in the water-soluble organic solvent, for convenience sake. Examples of such a compound include urea, ethylene urea, saccharides, etc.

In view of the storage stability of the colored dispersion liquid as described in the present embodiment, as the water-soluble organic solvent, a solvent having a small solubility for the colorant is preferred. It is particularly preferred to use glycerin and a solvent other than glycerin (preferably a polyhydric alcohol other than glycerin) in combination.

The preservative includes, for example, organic sulfur-based, organic nitrogen sulfur-based, organic halogen-based, haloallylsulfone-based, iodopropargyl-based, N-haloalkylthio-based, nitrile-based, pyridine-based, 8-oxyquinoline-based, benzothiazole-based, isothiazoline-based, dithiol-based, pyridinoxide-based, nitropropane-based, organic tin-based, phenol-based, quaternary ammonium salt-based, triazine-based, thiazine-based, anilide-based, adamantane-based, dithiocarbamate-based, brominated indanon-based, benzyl bromoacetate-based, inorganic salt-based compounds, and the like. Examples of the organic halogen-based compounds include sodium pentachlorophenol and the like. Examples of the pyridine oxide-based compounds include 2-pyridinethiol-1-oxide sodium salt and the like. Examples of the isothiazoline-based compounds include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, etc. Examples of other preservative antifungal agents include anhydrous sodium acetate, sodium sorbate, sodium benzoate, Proxel GXL (S) and Proxel XL-2 (S), trade names of Lonza Corporation.

Examples of the surfactant include known surfactants such as anionic, cationic, amphoteric, nonionic, silicone-based, fluorine-based surfactants, etc.

Examples of the anionic surfactant include alkyl sulfonate salts, alkylcarboxylate salts, $\alpha$-olefin sulfonate salts, polyoxyethylene alkyl ether acetate salts, N-acylamino acid and salts thereof, N-acylmethyltaurine salts, alkylsulfate salt polyoxyalkyl ether sulfate salts, alkylsulfate salt polyoxyethylene alkyl ether phosphate salts, rosin acid soap, castor oil sulfate ester salts, lauryl alcohol sulfate ester salts, alkylphenol-type phosphate esters, alkyl-type phosphate esters, alkylarylsulfonate salts, diethyl sulfosuccinate salts, diethylhexyl sulfosuccinate salts, dioctyl sulfosuccinate salts, and the like. Examples of commercially available products include Hytenol LA-10, LA-12, LA-16, Neohytenol ECL-30S, ECL-45, etc., all of which are manufactured by DKS Co., Ltd.

Examples of the cationic surfactant include 2-vinylpyridine derivatives, poly(4-vinylpyridine) derivatives, etc.

Examples of the amphoteric surfactant include lauryldimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, imidazoline derivatives and the like.

Examples of the nonionic surfactant include those based on ethers such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ethers, etc.; those based on esters such as polyoxyethylene oleate ester, polyoxyethylene distearate ester, sorbitan laurate, sorbitan monostearate, sorbitan monooleate, sorbitan sesquioleate, polyoxyethylene monooleate, polyoxyethylene stearate, etc.; those based on acetyleneglycols (alcohols) such as 2,4,7,9-tetramethyl-5-decyne-4,7-diol, 3,6-dimethyl-4-octyne-3,6-diol, 3,5-dimethyl-1-hexyn-3-ol, etc.; Surfynol 104, 105, 82, and 465 manufactured by Air Products Japan Co., Ltd. Olfine STG, etc.; those based on polyglycol ethers (e.g., Tergitol 15-S-7, etc. manufactured by SIGMA-ALDRICH).

Examples of the silicone-based surfactant include polyether modified siloxanes, polyether modified polydimethylsiloxanes, and the like. Examples of commercially available products include BYK-347 (polyether-modified siloxane); BYK-345 and BYK-348 (polyether-modified polydimethylsiloxane), all of which are manufactured by Byk-Chemie GmbH., and the like.

Examples of the fluorine-based surfactant include perfluoroalkyl sulfonate compounds, perfluoroalkyl carboxylate-based compounds, perfluoroalkyl phosphate ester compounds, perfluoroalkyl ethylene oxide adducts, polyoxyalkylene ether polymer compounds having a perfluoroalkylether group in their side chains, etc. Examples of commercially available products include Zonyl TBS, FSP, FSA, FSN-100, FSN, FSO-100, FSO, FS-300, Capstone FS-30 and FS-31 (all of which are manufactured by DuPont); PF-151N and PF-154N (both of which are manufactured by Omnova Solutions Inc.); and the like.

As the pH adjuster, any material can be used as long as the pH of a colored dispersion liquid can be controlled to approximately 5 to 11 without adversely affecting the colored dispersion liquid to be prepared. Examples thereof include alkanolamines, such as diethanolamine, triethanolamine, N-methyldiethanolamine, etc.; hydroxides of alkali metals, such as lithium hydroxide, sodium hydroxide, potassium hydroxide, etc.; ammonium hydroxide (ammonia water); carbonate salts of alkali metals, such as lithium carbonate, sodium carbonate, sodium hydrogen carbonate, potassium carbonate, etc.; alkali metal salts of organic acids, such as potassium acetate, etc.; inorganic bases, such as sodium silicate, disodium phosphate, etc.; and the like; and triethanolamine is preferred.

Examples of the chelating reagent include sodium ethylenediaminetetraacetate, sodium nitrilotriacetate, sodium hydroxyethyl ethylenediaminetriacetate, sodium diethylenetriaminepentaacetate, sodium uracil diacetate, and the like.

Examples of the rust inhibitor include acidic sulfite salts, sodium thiosulfate, ammonium thioglucolate, diisopropylammonium nitrite, pentaerythritol tetranitrate, dicyclohexylammonium nitrite, etc.

Examples of the water-soluble ultraviolet absorber include sulfonated benzophenone-based compounds, benzotriazol-based compounds, salicylic acid-based compounds, cinnamic acid-based compounds, triazine-based compounds, etc.

Examples of the water-soluble polymer compound include polyvinyl alcohol, cellulose derivatives, polyamines, polyimines, etc.

Examples of the viscosity modifier include a water-soluble polymer compound in addition to the water-soluble organic solvent, and examples thereof include polyvinyl alcohol, cellulose derivatives, polyamines, polyimines, etc.

Examples of the coloring matter dissolving agent include urea, ε-caprolactam, ethylene carbonate, etc.

As an antioxidant, a variety of organic anti-fading agents and metal complex-based anti-fading agents can be used. Examples of the organic anti-fading agent include hydroquinones, alkoxyphenols, dialkoxyphenols, phenols, anilines, amines, indanes, chromans, alkoxyanilines, heterocyclics, and the like. Examples of the metal complex-based anti-fading agents include nickel complexes, zinc complexes, etc.

Examples of the resin emulsion include emulsions formed of an acrylic resin, an epoxy resin, a urethane resin, a polyether resin, a polyamide resin, an unsaturated polyester resin, a phenol resin, a silicone resin, a fluorine resin, a polyvinyl resin, (vinyl chloride, vinyl acetate, polyvinyl alcohol, etc.) an alkyd resin, a polyester resin, an amino resin (a melanin resin, a urea resin, a melanin formaldehyde resin, etc.), and the like. The resin emulsion may contain two or more types of resins. In addition, the two or more types of resins may form a core/shell structure. Among the resin emulsions, a urethane resin emulsion is preferred.

The urethane resin emulsion is available as a commercial product, and many of them are in the form of an emulsion with a solid content of 30 to 60% by mass. Examples of commercially available products of the urethane resin emulsion include PERMARIN UA-150, 200, 310, 368 and 3945 and UCOAT UX-320 (all of which are manufactured by Sanyo Chemical Industries, Ltd.); HYDRAN WLS-201 and 210 and latex of HW-312B (all of which are manufactured by DIC Corporation); Superflex 150, 170 and 470 (all of which are manufactured by DKS Co., Ltd.); etc. Among these, examples of the polycarbonate-based urethane resin include PERMARIN UA-310 and 3945; UCOAT UX-320; and the like. Further, examples of the polyether-based urethane resin include PERMARIN UA-150 and 200; UCOAT UX-340; and the like.

The urethane resin in the urethane resin emulsion preferably has an SP value of 8 to 24 $(cal/cm^3)^{1/2}$, more preferably 8 to 17 $(cal/cm^3)^{1/2}$, and most preferably 8 to 11 $(cal/cm^3)^{1/2}$. Note that the SP value of the urethane resin is calculated by a Fedors method. When the urethane resin has an acidic group and this acidic group is neutralized to prepare an emulsion, the SP value of the urethane resin before neutralization is used.

When the urethane resin in the urethane resin emulsion has an acidic group such as a carboxy group, a sulfo group, or a hydroxy group, the acidic group may be in the form of an alkali salt. For example, an acidic group can be changed to an alkali salt by charging a urethane resin having an acidic group into water and stirring to prepare an aqueous solution, and then charging an alkaline compound into the aqueous solution to adjust the pH to 6.0 to 12.0.

Examples of the alkaline compound include hydroxides of alkali metals such as lithium hydroxide, sodium hydroxide, potassium hydroxide, etc.; hydroxides of alkaline earth metals such as beryllium hydroxide, magnesium hydroxide, calcium hydroxide, strontium hydroxide, etc. One type of the alkaline compound may be used alone or two or more types thereof may be used in combination.

[Process for preparing colored dispersion liquid, etc.]

As a method for preparing the colored dispersion liquid according to the present embodiment, for example, a method of preparing an aqueous dispersion liquid containing the (A) C.I. Disperse Orange 25, the (B) coloring matter, and a dispersant and further adding an additive such as a water-soluble organic solvent, as required, may be mentioned.

Examples of the method of preparing an aqueous dispersion include a known method such as stirring and mixing each component constituting the aqueous dispersion using a sand mill (bead mill), a roll mill, a ball mill, a paint shaker, an ultrasonic disperser, a high-pressure emulsifier, or the like. For example, when a sand mill is used, first, each component and beads as a dispersion medium are charged into a sand mill. As the beads, glass beads having a particle diameter of 0.01 to 1 mm, zirconia beads, or the like can be used. The amount of the beads to be used is preferably 2 to 6 parts by mass per 1 part by mass of the dispersion target. Then, the sand mill is operated to perform a dispersion treatment. Dispersion treatment conditions are generally preferably 1 to 20 hours at 1,000 to 2,000 rpm. Then, the beads are removed by filtration or the like after the dispersion treatment, thereby obtaining an aqueous dispersion.

The thus-prepared colored dispersion liquid may be subjected to microfiltration using a membrane filter or the like. In particular, when the colored dispersion liquid is used as an ink for inkjet textile printing, it is preferable to perform microfiltration for the purpose of preventing clogging or the like of the nozzle. The pore size of the filter used for microfiltration is typically 0.1 to 1 $\mu$m, and preferably 0.1 to 0.8 $\mu$m.

In addition, the viscosity at 25°C of the colored dispersion liquid as described in the present embodiment is preferably about 3 to 20 mPa·s when measured by an E-type viscometer from the viewpoint of discharge responsiveness at high speed. Further, the surface tension at 25°C of the colored dispersion liquid as described in the present embodiment is about 20 to 45 mN/m when measured by a plate method. Actually, the surface tension at 25°C is adjusted to obtain an appropriate physical property value in consideration of the discharge amount, response speed, ink droplet flight characteristics, etc. of the inkjet printer to be used.

The colored dispersion liquid as described in the present embodiment can be used in various fields, and is suitable for a waterborne writing ink, a waterborne printing ink, an information recording ink, textile printing, and the like. The colored dispersion liquid as described in the present embodiment is particularly preferably used as an ink for inkjet textile printing.

According to the colored dispersion liquid as described in the present embodiment, it is possible to effectively suppress particles in the colored dispersion liquid from aggregating during storage and increasing in average particle diameter, and also to effectively suppress particles from settling during storage. In other words, according to colored dispersion liquid of the present embodiment, it is possible to stably maintain a dispersed state of particles in the colored dispersion liquid.

In addition, the colored dispersion liquid as described in the present embodiment has a good initial filling property to an inkjet printer head and good continuous printing stability. Further, it is possible to obtain a clear image without bleeding of the image on paper after printing.

<Recording medium>

The recording medium as described in the present embodiment is a recording medium to which the colored dispersion liquid as described in the present embodiment is adhered. The recording medium is not particularly limited as long as the recording medium is recordable with the colored dispersion liquid as described in the preset embodiment, and a fiber, paper (normal paper, inkjet exclusive paper, etc.) can be mentioned. In particular, the recording medium as described in the present embodiment is preferably a hydrophobic fiber to which the colored dispersion liquid as described in the present embodiment is attached.

Examples of the hydrophobic fiber include polyester fibers, nylon fibers, triacetate fibers, diacetate fibers, polyamide fibers, and mixed spun fibers, etc. using two or more types of these fibers. Mixed spun fibers of these hydrophobic fibers with regenerated fibers such as rayon or natural fibers such as cotton, silk, wool, etc. are also included in the hydrophobic fibers in this specification. Among the fibers, those having an ink-receiving layer (anti-bleeding layer) are also known, and such fibers are also included in the hydrophobic fibers. A method for forming the ink-receiving layer is known technology and the fiber having an ink-receiving layer can also be obtained as a commercially available product. The material, structure, and the like of the ink-receiving layer are not particularly limited, and may be used as appropriate depending upon the purpose and the like.

<Method for textile printing of hydrophobic fibers>

The method for textile printing of a hydrophobic fiber as described in the present embodiment is a method for printing on a hydrophobic fiber using the colored dispersion liquid as described in the present embodiment described above. Methods for printing of a hydrophobic fiber are roughly classified into a direct printing method and a sublimation transfer method.

The direct printing method includes a printing step in which a droplet of the colored dispersion liquid is adhered to a hydrophobic fiber by an inkjet printer to obtain a recorded image such as a letter or a pattern, a fixing step in which the dye in the colored dispersion liquid adhered to the hydrophobic fiber in the printing step is fixed to the hydrophobic fiber by heat, and a washing step of washing the unfixed dye remaining in the hydrophobic fiber.

The fixing step is generally performed by known steaming or baking. Examples of the steaming include a method in which a dye is attached (also referred to as wet heat fixing) to a hydrophobic fiber by treating the hydrophobic fiber with a high-temperature steamer for about 10 minutes at usually 170 to 180°C, or a high-pressure steamer for about 20 minutes at usually 120 to 130°C. Examples of the baking (thermosol) include a method in which a dye is attached (also referred to as dry heat fixation) to a hydrophobic fiber by treating the hydrophobic fiber at 190 to 210°C for about 6 to 120 seconds.

The washing step is a step of washing the obtained fiber with warm water and, if necessary, with ambient temperature water. The warm water or ambient temperature water to be used for washing may contain a surfactant. The washed hydrophobic fiber is also preferably dried, usually at 50 to 120°C for 5 to 30 minutes.

On the other hand, the sublimation transfer method includes printing by adhering a droplet of the colored dispersion liquid to an intermediate recording medium by an inkjet printer to obtain a recorded image, such as a letter, a pattern, etc., and transferring by contacting a hydrophobic fiber with a surface of the intermediate recording medium on which the colored dispersion liquid is adhered to transfer the recorded image to the hydrophobic fiber by heat treatment.

As the intermediate recording medium, it is preferable that the dye in the adhered colored dispersion liquid does not aggregate on its surface and the intermediate recording medium does not interfere with sublimation of the dye when transfer of the recorded image to the hydrophobic fiber is performed. As an example of such an intermediate recording medium, a paper on the surface of which an ink-receiving layer is formed with inorganic fine particles such as silica may be mentioned, and a special paper for inkjet, or the like may be used.

The heat treatment in the transfer step typically includes dry heat treatment at about 190 to 200°C.

The method for textile printing of a hydrophobic fiber as described in the present embodiment may further include a pretreating step of pretreating the hydrophobic fiber for the purpose of preventing bleeding or the like. Examples of this pretreatment step include a step of imparting an aqueous solution (pretreatment liquid) containing a sizing agent, an alkaline substance, a reduction inhibitor, and a hydrotropic agent to a hydrophobic fiber before the colored dispersion liquid is adhered.

Examples of the sizing agent include natural gums such as guar, locust bean, etc.; starches; marine algae such as sodium alginate, Gloiopeltis, etc.; plant skin such as pectic acid, etc.; fibrous derivatives such as methyl fibrin, ethyl fibrin, hydroxyethyl cellulose, carboxymethyl cellulose, etc.; processed starch such as carboxymethyl starch, etc.; synthetic glue such as polyvinyl alcohol and polyacrylate esters; and the like. Sodium alginate is preferable.

The alkaline substance includes, for example, alkali metal salts of inorganic acids or organic acids; salts of alkaline earth metals; compounds which liberate alkali when heated; and the like. Alkali metal hydroxides and alkali metal salts are preferable. Examples include alkali metal hydroxides such as sodium hydroxide, calcium hydroxide, etc.; alkali metal salts of inorganic compounds such as sodium carbonate, sodium bicarbonate, potassium carbonate, sodium dihydrogen phosphate, disodium hydrogen phosphate, sodium phosphate, etc.; alkali metal salts of organic compounds such as sodium formate, sodium trichloroacetate, etc.; and the like. Sodium bicarbonate is preferable.

As the reduction inhibitor, sodium meta-nitrobenzenesulfonate is preferable. As the hydrotropic agent, ureas such as urea, dimethylurea, etc. may be exemplified, and urea is preferable.

With regard to the sizing agent, the alkaline substance, the reduction inhibitor, and the hydrotropic agent, any one type may be used alone, or two or more types may be used in combination.

The mixing ratio of each component in the pretreating liquid is, for example, 0.5 to 5% by mass of the sizing agent, 0.5 to 5% by mass of sodium bicarbonate, 0 to 5% by mass of sodium meta-nitrobenzenesulfonate, 1 to 20% by mass of urea, and the balance of water.

Methods of attaching the pretreating liquid to hydrophobic fibers include, for example, a padding method. The aperture ratio of padding is preferably about 40 to 90%, and more preferably about 60 to 80%.

## EXAMPLES

In the following, the present invention is explained in more detail by way of the Examples; however, the present invention is not limited to these Examples. Unless otherwise indicated in the Examples, "part(s)" and "%" mean part(s)

by mass and % by mass, respectively. Note that all of the aqueous dispersion liquids and inks containing the same in the Examples are included in the colored dispersion liquids described above.

<Preparation Example 1: Preparation of emulsion liquid 1>

To a mixture of 25% sodium hydroxide (6 parts), ion-exchanged water (54 parts), and propylene glycol (20 parts), Joncryl 678 (20 parts) (manufactured by BASF Co., Ltd.) was charged, and the mixture was heated to 90 to 120°C and stirred for 5 hours to obtain an emulsion liquid 1 of Joncryl 678.

<Preparation Example 2: Preparation of Y54 dispersion liquid>

To a mixture containing Kayaset Yellow AG (C.I. Disperse Yellow 54 manufactured by Nippon Kayaku Co., Ltd.) (30 parts) as a sublimable dye, Lavelin W-40 (aqueous solution of a formalin polycondensate of sodium creosote oil sulfonate manufactured by DKS Co., Ltd.) (22.5 parts), Proxel GXL (manufactured by Lonza Co., Ltd.) (0.2 parts), Surfynol 104PG50 (Surfynol 104 (acetylene glycol surfactant manufactured by Air Products Japan Co., Ltd.) diluted to a concentration of 50% with propylene glycol) (0.4 parts), and ion-exchanged water (46.9 parts), glass beads with a diameter of 0.2 mm were added, and the mixture was subjected to a dispersion treatment in a sand mill for about 15 hours under cooling. To the obtained liquid, ion-exchanged water (77.5 parts) and Lavelin W-40 (22.5 parts) were added to adjust the dye content ratio to 15%, and then the obtained mixture was filtered through a glass fiber filter paper GC-50 (ADVANTEC Co., Ltd., pore diameter of a filter: 0.5 μm) to obtain a Y54 dispersion liquid.

<Preparation Example 3: Preparation of B360 dispersion liquid>

To a mixture containing C.I. Disperse Blue 360 (30 parts) as a sublimable dye, Lavelin W-40 (22.5 parts), Proxel GXL (0.2 parts), Surfynol 104PG50 (0.4 parts), and ion-exchanged water (46.9 parts), glass beads with a diameter of 0.2 mm were added, and the mixture was subjected to a dispersion treatment in a sand mill for about 15 hours under cooling. To the obtained liquid, ion-exchanged water (47.5 parts) and Lavelin W-40 (52.5 parts) were added to adjust the dye content ratio to 15%, and then the obtained mixture was filtered through a glass fiber filter paper GC-50 (ADVANTEC Co., Ltd., pore diameter of a filter: 0.5 μm) to obtain a B360 dispersion liquid.

<Preparation Example 4: Preparation of Or60 dispersion liquid>

To a mixture containing C.I. Solvent Orange 60 (30 parts) as a sublimable dye, Lavelin W-40 (22.5 parts), Proxel GXL (0.2 parts), Surfynol 104PG50 (0.4 parts), and ion-exchanged water (46.9 parts), glass beads with a diameter of 0.2 mm were added, and the mixture was subjected to a dispersion treatment in a sand mill for about 15 hours under cooling. To the obtained liquid, ion-exchanged water (47.5 parts) and Lavelin W-40 (52.5 parts) were added to adjust the dye content ratio to 15%, and then the obtained mixture was filtered through a glass fiber filter paper GC-50 (ADVANTEC Co., Ltd., pore diameter of a filter: 0.5 μm) to obtain an OR60 dispersion liquid.

<Examples 1 to 8: Preparation of aqueous dispersion liquids 1 to 8>

Glass beads with a diameter of 0.2 mm were added to mixtures each obtained by mixing the respective components described in the following Tables 1 and 2 and then the respective mixtures obtained were subjected to a dispersion treatment in a sand mill for about 15 hours under cooling. The obtained liquids were filtered through a glass fiber filter paper GC-50 (ADVANTEC Co., Ltd., pore diameter of a filter: 0.5 μm) to prepare aqueous dispersion liquids 1 to 8. In Tables 1 to 2, the numerical values of each component indicate the number of parts added.

<Comparative Examples 1 and 2: Preparation of aqueous dispersion liquids 9 and 10>

Glass beads with a diameter of 0.2 mm were added to mixtures each obtained by mixing the respective components described in the following Table 2 and then the respective mixtures were subjected to a dispersion treatment in a sand mill for about 15 hours under cooling. The obtained liquids were filtered through a glass fiber filter paper GC-50 (ADVANTEC Co., Ltd., pore diameter of a filter: 0.5 μm) to prepare aqueous dispersion liquids 9 and 10.

[Table 1]

| Composition of aqueous dispersion liquid | Example | | | | |
|---|---|---|---|---|---|
| | 1 | 2 | 3 | 4 | 5 |
| | Aqueous dispersion liquid 1 | Aqueous dispersion liquid 2 | Aqueous dispersion liquid 3 | Aqueous dispersion liquid 4 | Aqueous dispersion liquid 5 |
| C.I. Disperse orange 25 | 16.50 | 16.50 | 16.50 | 16.50 | 16.50 |
| C.I. Disperse orange 73 | 0.08 | 0.17 | 0.33 | 0.50 | 0.66 |
| Lavelin W-40 | 41.25 | 41.25 | 41.25 | 41.25 | 41.25 |
| BPS-30 | 8.25 | 8.25 | 8.25 | 8.25 | 8.25 |
| Proxel GXL | 0.20 | 0.20 | 0.20 | 0.20 | 0.20 |
| Surfynol 104PG50 | 0.12 | 0.12 | 0.12 | 0.12 | 0.12 |
| Ion-exchanged water | 33.60 | 33.52 | 33.35 | 33.19 | 33.02 |

[Table 2]

| Composition of aqueous dispersion liquid | Example | | | Comparative Example | |
|---|---|---|---|---|---|
| | 6 | 7 | 8 | 1 | 2 |
| | Aqueous dispersion liquid 6 | Aqueous dispersion liquid 7 | Aqueous dispersion liquid 8 | Aqueous dispersion liquid 9 | Aqueous dispersion liquid 10 |
| C.I. Disperse orange 25 | 16.50 | 16.50 | 16.50 | 16.50 | 16.50 |
| C.I. Disperse orange 73 | 0.83 | 1.24 | 1.65 | 0.00 | 4.20 |
| Lavelin W-40 | 41.25 | 41.25 | 41.25 | 41.25 | 41.25 |
| BPS-30 | 8.25 | 8.25 | 8.25 | 8.25 | 8.25 |
| Proxel GXL | 0.20 | 0.20 | 0.20 | 0.20 | 0.20 |
| Surfynol 104PG50 | 0.12 | 0.12 | 0.12 | 0.12 | 0.12 |
| Ion-exchanged water | 32.86 | 32.44 | 32.03 | 33.68 | 29.48 |

Abbreviations and the like in Tables 1 and 2 have the following meanings.

Lavelin W-40: Aqueous solution of a formalin polycondensate of sodium creosote oil sulfonate (manufactured by DKS Co., Ltd.).

BPS-30: NIKKOL BPS-30 (ethylene oxide adduct of phytosterol, manufactured by Nikko Chemicals Co., Ltd.).

Proxel GXL: preservative antifungal agent (manufactured by Lonza)

Surfynol 104PG50: Surfynol 104 (acetylene glycol surfactant, manufactured by Air Products Japan Co., Ltd.) diluted with propylene glycol to 50% concentration.

<Examples 9 to 16: Preparation of aqueous orange inks 1 to 8>

Each of the aqueous dispersion liquids 1 to 8 obtained in Examples 1 to 8 and the respective components described in Tables 3 and 4 below were mixed and stirred for 30 minutes, and then each of the resulting mixtures was filtered through a glass fiber filter paper GC-50 (manufactured by Advantec Ltd., pore diameter of the filter: 0.5 μm) to obtain aqueous orange inks 1 to 8. In Tables 3 and 4, the numerical values of each component indicate the number of parts added.

<Comparative Examples 3 and 4: Preparation of aqueous orange inks 9 and 10>

Each of the aqueous dispersion liquids 9 and 10 obtained in Comparative Examples 1 and 2 and the respective components described in Table 4 below were mixed and stirred for 30 minutes, and then filtered through a glass fiber filter paper GC-50(ADVANTEC Co., Ltd., pore size of a filter: 0.5 μm) to prepare aqueous orange inks 9 and 10.

[Table 3]

| Composition of aqueous orange ink | | Example | | | | |
|---|---|---|---|---|---|---|
| | | 9 | 10 | 11 | 12 | 13 |
| | | Orange ink 1 | Orange ink 2 | Orange ink 3 | Orange ink 4 | Orange ink 5 |
| Aqueous dispersion liquid 1 | | 13.3 | | | | |
| Aqueous dispersion liquid 2 | | | 13.3 | | | |
| Aqueous dispersion liquid 3 | | | | 13.3 | | |
| Aqueous dispersion liquid 4 | | | | | 13.3 | |
| Aqueous dispersion liquid 5 | | | | | | 13.3 |
| Other components | Glycerin | 15 | 15 | 15 | 15 | 15 |
| | Propylene glycol | 10 | 10 | 10 | 10 | 10 |
| | Triethylene glycol monomethylether | 5 | 5 | 5 | 5 | 5 |
| | BYK-348 | 0.8 | 0.8 | 0.8 | 0.8 | 0.8 |
| | TEA-80 | 0.1 | 0.1 | 0.1 | 0.1 | 0.1 |
| | Proxel GXL | 0.1 | 0.1 | 0.1 | 0.1 | 0.1 |
| | Ion-exchanged water | Balance | Balance | Balance | Balance | Balance |
| Total | | 100 | 100 | 100 | 100 | 100 |

[Table 4]

| Composition of aqueous orange ink | Example | | | Comparative Example | |
|---|---|---|---|---|---|
| | 14 | 15 | 16 | 3 | 4 |
| | Orange ink 6 | Orange ink 7 | Orange ink 8 | Orange ink 9 | Orange ink 10 |
| Aqueous dispersion liquid 6 | 13.3 | | | | |
| Aqueous dispersion liquid 7 | | 13.3 | | | |
| Aqueous dispersion liquid 8 | | | 13.3 | | |
| Aqueous dispersion liquid 9 | | | | 13.3 | |
| Aqueous dispersion liquid 10 | | | | | 13.3 |

(continued)

| Composition of aqueous orange ink | | Example | | | Comparative Example | |
|---|---|---|---|---|---|---|
| | | 14 | 15 | 16 | 3 | 4 |
| | | Orange ink 6 | Orange ink 7 | Orange ink 8 | Orange ink 9 | Orange ink 10 |
| Other components | Glycerin | 15 | 15 | 15 | 15 | 15 |
| | Propylene glycol | 10 | 10 | 10 | 10 | 10 |
| | Triethylene glycol monomethylether | 5 | 5 | 5 | 5 | 5 |
| | BYK-348 | 0.8 | 0.8 | 0.8 | 0.8 | 0.8 |
| | TEA-80 | 0.1 | 0.1 | 0.1 | 0.1 | 0.1 |
| | Proxel GXL | 0.1 | 0.1 | 0.1 | 0.1 | 0.1 |
| | Ion-exchanged water | Balance | Balance | Balance | Balance | Balance |
| Total | | 100 | 100 | 100 | 100 | 100 |

Abbreviations and the like in Tables 3 and 4 indicate the following.

BYK-348: Polyether-modified polydimethylsiloxane (manufactured by Byk-Chemie GmbH)

TEA-80: Triethanolamine (manufactured by Oxalis Chemicals Ltd.)

Proxel GXL: Preservative antifungal agent (manufactured by Lonza)

<Evaluation>

The following evaluation tests were performed using the aqueous orange inks 1 to 10 prepared as described above.

Results are indicated in Tables 5 and 6 below.

[Particle size change test]

With respect to the aqueous orange inks after storage at 60°C for 5 days, the median diameter (D50, number-average particle diameter) of the colorant in the respective inks was measured using a MICRO TRAC UPA EX150 (manufactured by MicrotrackBEL Corp.) and evaluated based on the following criteria. A, B, or C represents a good evaluation, and D represents a poor evaluation.

-Evaluation criteria-

A: D50 is below 140 nm.
B: D50 is 140 nm or more and less than 160 nm.
C: D50 is 160 nm or more and less than 170 nm.
D: D50 is 170 nm or more.

[Sedimentation property test]

Using an absorbance $Abs_0$ at a maximum absorption wavelength ($\lambda$max) around 420 nm measured at the time of ink preparation and an absorbance $Abs_1$ at a maximum absorption wavelength ($\lambda$max) around 420 nm measured after storage at 60°C for 5 days by collecting a supernatant of the respective inks, a sedimentation rate was calculated according to the following equation. Note that the absorbance was measured for a diluted solution obtained by adding

water to the inks and diluting them 2,000 times.

$$\text{Sedimentation rate (\%)} = \{(Abs_0 - Abs_1)/Abs_0\} \times 100$$

Then, the calculated sedimentation rate was evaluated based on the following criteria. A or B represents a good evaluation, and C represents a poor evaluation.

-Evaluation criteria-

A: Sedimentation rate is less than 20%.

B: Sedimentation rate is 20% or more and less than 40%.

C: Sedimentation rate is 40% or more.

[Table 5]

| | Example | | | | |
|---|---|---|---|---|---|
| | 9 | 10 | 11 | 12 | 13 |
| Particle size change test | B | B | A | A | A |
| Sedimentation property test | B | B | A | A | A |

[Table 6]

| | Example | | | Comparative Example | |
|---|---|---|---|---|---|
| | 14 | 15 | 16 | 3 | 4 |
| Particle size change test | A | B | C | D | D |
| Sedimentation property test | A | B | B | C | C |

As is apparent from the results of Tables 5 and 6, all of the aqueous orange inks of Examples 9 to 16 prepared using the aqueous dispersions of Examples 1 to 8 had no significant increase in particle diameter after the storage at high temperature, thus containing few coarse particles, and having good sedimentation properties and excellent storage stability. Contrary to this, the aqueous orange inks of Comparative Examples 3 and 4 prepared using the dispersion liquids of Comparative Examples 1 and 2 were inferior in storage stability to the aqueous orange inks of Examples 9 to 16.

<Examples 17 to 20: Preparation of aqueous dispersions 11 to 14>

Glass beads with a 0.2 mm diameter were added to each of the mixtures of the respective components described in Table 7 below, and then the respective mixtures were subjected to a dispersion treatment in a sand mill for about 15 hours under water cooling. The obtained liquids were filtered through a glass fiber filter paper GC-50 (ADVANTEC Co., Ltd., pore diameter of a filter: 0.5 μm) to prepare aqueous dispersion liquids 11 to 14. In Table 7, the numerical value of each component indicates the number of parts added.

[Table 7]

| Composition of aqueous dispersion liquid | Example | | | |
|---|---|---|---|---|
| | 17 | 18 | 19 | 20 |
| | Aqueous dispersion liquid 11 | Aqueous dispersion liquid 12 | Aqueous dispersion liquid 13 | Aqueous dispersion liquid 14 |
| C.I. Disperse orange 25 | 16.5 | 16.5 | 16.5 | 16.5 |
| C.I. Disperse orange 73 | 0.33 | 0.33 | 0.33 | 0.33 |
| Pionin D-6320 | 4.95 | | | 4.95 |
| SM-57 | | 7.07 | | 7.07 |
| SM-210 | | | 4.95 | |
| Proxel GXL | 0.2 | 0.2 | 0.2 | 0.2 |
| Surfynol 104PG50 | 0.12 | 0.12 | 0.12 | 0.12 |
| Ion-exchanged water | 77.9 | 75.78 | 77.9 | 70.83 |

Abbreviations and the like in Table 7 have the following meanings.

Pionin D-6320: Polyoxyethylene styrylphenyl ether-based dispersant (manufactured by Takemoto Oil and Fat Co., Ltd.)
SM-57: Polyoxyethylene styrylphenyl ether sulfate-based dispersant (manufactured by Toho Chemical Industry Co., Ltd.)
SM-210: Polyoxyethylene styrylphenyl ether sulfate-based dispersant (manufactured by Toho Chemical Industry Co., Ltd.)

<Examples 21 to 24: Preparation of aqueous orange inks 11 to 14>

Each of the aqueous dispersion liquids 11 to 14 obtained in Examples 17 to 20 and the respective components described in Table 8 below were mixed and stirred for 30 minutes, and then filtered through a glass fiber filter paper GC-50 (ADVANTEC Co., Ltd., pore size of a filter: 0.5 μm) to prepare aqueous orange inks 11 to 14. In Table 8, the numerical value of each component indicates the number of parts added.

[Table 8]

| Composition of aqueous orange ink | Example | | | |
|---|---|---|---|---|
| | 21 | 22 | 23 | 24 |
| | Orange ink 11 | Orange ink 12 | Orange ink 13 | Orange ink 14 |
| Aqueous dispersion liquid 11 | 13.3 | | | |
| Aqueous dispersion liquid 12 | | 13.3 | | |
| Aqueous dispersion liquid 13 | | | 13.3 | |
| Aqueous dispersion liquid 14 | | | | 13.3 |

(continued)

| Composition of aqueous orange ink | | Example | | | |
|---|---|---|---|---|---|
| | | 21 | 22 | 23 | 24 |
| | | Orange ink 11 | Orange ink 12 | Orange ink 13 | Orange ink 14 |
| Other components | Glycerin | 15 | 15 | 15 | 15 |
| | Propylene glycol | 10 | 10 | 10 | 10 |
| | Triethylene glycol monomethylether | 5 | 5 | 5 | 5 |
| | BYK-348 | 0.8 | 0.8 | 0.8 | 0.8 |
| | TEA-80 | 0.1 | 0.1 | 0.1 | 0.1 |
| | Proxel GXL | 0.1 | 0.1 | 0.1 | 0.1 |
| | Ion-exchanged water | Balance | Balance | Balance | Balance |
| Total | | 100 | 100 | 100 | 100 |

<Evaluation>

Using the aqueous orange inks 11 to 14 prepared as described above, the above-described particle size change test, the sedimentation property test, and the following re-dispersibility evaluation test were performed. Results are indicated in Table 9 below.

[Re-dispersibility evaluation test]

25 μL of each of the aqueous orange inks was dropped onto a glass petri dish and dried for 1 hour in a constant temperature and humidity machine at 60°C. To the dried product obtained, drops of ion-exchanged water in a volume of 10 mL were added at room temperature, and whether or not the dried product was re-dispersed was visually observed and the respective orange inks were evaluated based on the following criteria. The ink that can be re-dispersed is considered excellent due to ease of fixing clogged ink after drying. A, B, or C represents good evaluation, and D is poor in evaluation.

-Evaluation criteria-

A: There was no residue and all of the clog was re-dispersed.
B: The residue remained a little, but most of the clog was re-dispersed.
C: The residue remained a lot, and the clog was somewhat re-dispersed.
D: No clog was re-dispersed.

[Table 9]

| | Example | | | |
|---|---|---|---|---|
| | 21 | 22 | 23 | 24 |
| Particle size change test | C | C | A | B |
| Sedimentation property test | A | A | A | A |
| Re-dispersibility test | C | A | A | A |

As is apparent from the results of Table 9, all of the aqueous orange inks of Examples 21 to 24 prepared using the aqueous dispersion liquids of Examples 17 to 20 had no significant increase in particle diameter after the storage at high temperature, thus containing few coarse particles, and having good sedimentation properties and excellent

storage stability. Furthermore, the aqueous orange inks of Examples 21 to 24 (particularly, the aqueous orange inks of Examples 22 to 24 containing polyoxyethylene styrylphenyl ether sulfate-based dispersant) had good re-dispersibility as well.

<Examples 25 to 28: Preparation of aqueous dispersions 15 to 18>

Glass beads with a 0.2 mm diameter were added to each of the mixtures of the components described in Table 10 below, and the respective mixtures were subjected to a dispersion treatment in a sand mill for about 15 hours under water cooling. The obtained liquids were filtered through a glass fiber filter paper GC-50 (ADVANTEC Co., Ltd., pore diameter of a filter: 0.5 μm) to prepare aqueous dispersion liquids 15 to 18. In Table 10, the numerical value of each component indicates the number of parts added.

[Table 10]

| Composition of aqueous dispersion liquid | Example | | | |
|---|---|---|---|---|
| | 25 | 26 | 27 | 28 |
| | Aqueous dispersion liquid 15 | Aqueous dispersion liquid 16 | Aqueous dispersion liquid 17 | Aqueous dispersion liquid 18 |
| C.I. Disperse orange 25 | 16.50 | 16.50 | 16.50 | 16.50 |
| C.I. Disperse orange 49 | 0.33 | | | |
| C.I. Disperse orange 62 | | 0.33 | | |
| C.I. Disperse orange 71 | | | 0.33 | |
| C.I. Disperse orange 148 | | | | 0.33 |
| Lavelin W-40 | 41.25 | 41.25 | 41.25 | 41.25 |
| BPS-30 | 8.25 | 8.25 | 8.25 | 8.25 |
| Proxel GXL | 0.20 | 0.20 | 0.20 | 0.20 |
| Surfynol 104PG50 | 0.12 | 0.12 | 0.12 | 0.12 |
| Ion-exchanged water | 33.35 | 33.35 | 33.35 | 33.35 |

<Examples 29 to 32: Preparation of aqueous orange inks 15 to 18 >

Each of the aqueous dispersion liquids 15 to 18 obtained in Examples 25 to 28 and the respective components described in Table 11 below were mixed and stirred for 30 minutes, and then each of the resulting mixtures was filtered through a glass fiber filter paper GC-50 (manufactured by Advantec Ltd., pore diameter of the filter: 0.5 μm) to obtain aqueous orange inks 15 to 18. In Table 11, the numerical value of each component indicates the number of parts added.

[Table 11]

| Composition of aqueous orange ink | Example | | | |
|---|---|---|---|---|
| | 29 | 30 | 31 | 32 |
| | Orange ink 15 | Orange ink 16 | Orange ink 17 | Orange ink 18 |
| Aqueous dispersion liquid 15 | 13.3 | | | |
| Aqueous dispersion liquid 16 | | 13.3 | | |
| Aqueous dispersion liquid 17 | | | 13.3 | |
| Aqueous dispersion liquid 18 | | | | 13.3 |

(continued)

| Composition of aqueous orange ink | | Example | | | |
|---|---|---|---|---|---|
| | | 29 | 30 | 31 | 32 |
| | | Orange ink 15 | Orange ink 16 | Orange ink 17 | Orange ink 18 |
| Other components | Glycerin | 15 | 15 | 15 | 15 |
| | Propylene glycol | 10 | 10 | 10 | 10 |
| | Triethylene glycol monomethylether | 5 | 5 | 5 | 5 |
| | BYK-348 | 0.8 | 0.8 | 0.8 | 0.8 |
| | TEA-80 | 0.1 | 0.1 | 0.1 | 0.1 |
| | Proxel GXL | 0.1 | 0.1 | 0.1 | 0.1 |
| | Ion-exchanged water | Balance | Balance | Balance | Balance |
| Total | | 100 | 100 | 100 | 100 |

<Evaluation>

Using the aqueous orange inks 15 to 18 prepared as described above, the above-described particle size change test, the sedimentation property test, and the re-dispersibility evaluation test were performed. Results are indicated in Table 12 below.

[Table 12]

| | Example | | | |
|---|---|---|---|---|
| | 29 | 30 | 31 | 32 |
| Particle size change test | A | A | A | A |
| Sedimentation property test | A | A | A | A |
| Re-dispersibility test | A | A | A | A |

As is apparent from the results of Table 12, all of the aqueous orange inks of Examples 29 to 32 prepared using the aqueous dispersion liquids of Examples 25 to 28 had no significant increase in particle diameter after the storage at high temperature, thus containing few coarse particles, and having good sedimentation properties and excellent storage stability. In addition, the aqueous orange inks of Examples 29 to 32 were also excellent in re-dispersibility.

<Examples 33 to 42: Preparation of aqueous dispersions 19 to 28>

Glass beads with a 0.2 mm diameter were added to each of the mixtures of the components described in Tables 13 and 14 below, and the mixtures were subjected to a dispersion treatment in a sand mill for about 15 hours under water cooling. The obtained liquids were filtered through a glass fiber filter paper GC-50 (ADVANTEC Co., Ltd., pore diameter of a filter: 0.5 μm) to prepare aqueous dispersion liquids 19 to 28. In Tables 13 and 14, the numerical values of each component indicate the number of parts added.

<Comparative Example 5: Preparation of aqueous dispersion liquid 29>

Glass beads with a 0.2 mm diameter were added to a mixture of the components described in Table 14 below, and the mixture was subjected to a dispersion treatment in a sand mill for about 15 hours under water cooling. The obtained liquid was filtered through a glass fiber filter paper GC-50 (ADVANTEC Co., Ltd., pore diameter of a filter: 0.5 μm) to prepare an aqueous dispersion liquid 29.

[Table 13]

| Composition of aqueous dispersion liquid | Example | | | | | |
|---|---|---|---|---|---|---|
| | 33 | 34 | 35 | 36 | 37 | 38 |
| | Aqueous dispersion liquid 19 | Aqueous dispersion liquid 20 | Aqueous dispersion liquid 21 | Aqueous dispersion liquid 22 | Aqueous dispersion liquid 23 | Aqueous dispersion liquid 24 |
| C.I. Disperse orange 25 | 16.50 | 16.50 | 16.50 | 16.50 | 16.50 | 16.50 |
| C.I. Disperse orange 73 | 0.33 | 0.33 | 0.33 | 0.33 | 0.33 | 0.33 |
| Emulsion 1 of Joncryl 678 | 24.75 | | | | | |
| TS-1500 | | 4.95 | | | | |
| TS-2000 | | | 4.95 | | | |
| SM-57 | | | | 16.50 | | |
| SM-210 | | | | | 16.50 | |
| Pionin D-7240 | | | | | | 4.95 |
| Proxel GXL | 0.20 | 0.20 | 0.20 | 0.20 | 0.20 | 0.20 |
| Surfynol 104PG50 | 0.12 | 0.12 | 0.12 | 0.12 | 0.12 | 0.12 |
| Ion-exchanged water | 58.10 | 77.90 | 77.90 | 66.35 | 66.35 | 77.90 |

[Table 14]

| Composition of aqueous dispersion liquid | Example | | | | Comparative Example |
|---|---|---|---|---|---|
| | 39 | 40 | 41 | 42 | 5 |
| | Aqueous dispersion liquid 25 | Aqueous dispersion liquid 26 | Aqueous dispersion liquid 27 | Aqueous dispersion liquid 28 | Aqueous dispersion liquid 29 |
| C.I. Disperse orange 25 | 16.50 | 16.50 | 16.50 | 16.50 | 16.50 |
| C.I. Disperse orange 73 | 0.33 | 0.33 | 0.33 | 0.33 | 0.00 |
| Emulsion 1 of Joncryl 678 | | | | | |
| TS-1500 | 4.95 | 4.95 | | | |
| TS-2000 | | | 4.95 | 4.95 | 4.95 |
| SM-57 | 4.95 | | 4.95 | | |
| SM-210 | | 4.95 | | 4.95 | 4.95 |
| Pionin D-7240 | | | | | |
| Proxel GXL | 0.20 | 0.20 | 0.20 | 0.20 | 0.20 |
| Surfynol 104PG50 | 0.12 | 0.12 | 0.12 | 0.12 | 0.12 |

(continued)

| Composition of aqueous dispersion liquid | Example | | | | Comparative Example |
|---|---|---|---|---|---|
| | 39 | 40 | 41 | 42 | 5 |
| | Aqueous dispersion liquid 25 | Aqueous dispersion liquid 26 | Aqueous dispersion liquid 27 | Aqueous dispersion liquid 28 | Aqueous dispersion liquid 29 |
| Ion-exchanged water | 72.95 | 72.95 | 72.95 | 72.95 | 73.28 |

[Examples 43 to 52: Preparation of aqueous orange inks 19 to 28]

Each of the aqueous dispersion liquids 19 to 28 obtained in Comparative Examples 33 to 42 and the components described in Tables 15 and 16 below were mixed and stirred for 30 minutes, and then filtered through a glass fiber filter paper GC-50 (manufactured by Advantec Ltd., pore diameter: 0.5 μm) to prepare aqueous orange inks 19 to 28. In Tables 15 and 16, numerical values of the respective components indicate the number of parts added.

<Comparative Example 6: Preparation of aqueous orange ink 29>

Aqueous dispersion liquid 29 obtained in Comparative

Example 5 and the components described in Table 16 below were mixed and stirred for 30 minutes, and then filtered through a glass fiber filter paper GC-50 (manufactured by Advantec Ltd., pore diameter: 0.5 μm) to prepare an aqueous orange ink 29.

[Table 15]

| Composition of aqueous orange ink | | Example | | | | | |
|---|---|---|---|---|---|---|---|
| | | 43 | 44 | 45 | 46 | 47 | 48 |
| | | Orange ink 19 | Orange ink 20 | Orange ink 21 | Orange ink 22 | Orange ink 23 | Orange ink 24 |
| Aqueous dispersion liquid 19 | | 13.3 | | | | | |
| Aqueous dispersion liquid 20 | | | 13.3 | | | | |
| Aqueous dispersion liquid 21 | | | | 13.3 | | | |
| Aqueous dispersion liquid 22 | | | | | 13.3 | | |
| Aqueous dispersion liquid 23 | | | | | | 13.3 | |
| Aqueous dispersion liquid 24 | | | | | | | 13.3 |
| Other components | Glycerin | 15 | 15 | 15 | 15 | 15 | 15 |
| | Propylene glycol | 10 | 10 | 10 | 10 | 10 | 10 |
| | Triethylene glycol monomethylether | 5 | 5 | 5 | 5 | 5 | 5 |
| | BYK-348 | 0.8 | 0.8 | 0.8 | 0.8 | 0.8 | 0.8 |
| | TEA-80 | 0.1 | 0.1 | 0.1 | 0.1 | 0.1 | 0.1 |
| | Proxel GXL | 0.1 | 0.1 | 0.1 | 0.1 | 0.1 | 0.1 |
| | Ion-exchanged water | Balance | Balance | Balance | Balance | Balance | Balance |
| Total | | 100 | 100 | 100 | 100 | 100 | 100 |

[Table 16]

| Composition of aqueous orange ink | | Example | | | | Comparative Example |
|---|---|---|---|---|---|---|
| | | 49 | 50 | 51 | 52 | 6 |
| | | Orange ink 25 | Orange ink 26 | Orange ink 27 | Orange ink 28 | Orange ink 29 |
| Aqueous dispersion liquid 25 | | 13.3 | | | | |
| Aqueous dispersion liquid 26 | | | 13.3 | | | |
| Aqueous dispersion liquid 27 | | | | 13.3 | | |
| Aqueous dispersion liquid 28 | | | | | 13.3 | |
| Aqueous dispersion liquid 29 | | | | | | 13.3 |
| Other components | Glycerin | 15 | 15 | 15 | 15 | 15 |
| | Propylene glycol | 10 | 10 | 10 | 10 | 10 |
| | Triethylene glycol monomethylether | 5 | 5 | 5 | 5 | 5 |
| | BYK-348 | 0.8 | 0.8 | 0.8 | 0.8 | 0.8 |
| | TEA-80 | 0.1 | 0.1 | 0.1 | 0.1 | 0.1 |
| | Proxel GXL | 0.1 | 0.1 | 0.1 | 0.1 | 0.1 |
| | Ion-exchanged water | Balance | Balance | Balance | Balance | Balance |
| Total | | 100 | 100 | 100 | 100 | 100 |

<Evaluation>

Using the aqueous orange inks 19 to 24 prepared as described above, the particle size change test and the sedimentation property test were performed. Furthermore, using the aqueous orange inks 25 to 29, the particle size change test, the sedimentation property test, and the re-dispersibility evaluation test were performed. Results are indicated in Tables 17 and 18 below.

[Table 17]

| | Example | | | | | |
|---|---|---|---|---|---|---|
| | 43 | 44 | 45 | 46 | 47 | 48 |
| Particle size change test | A | A | A | A | A | A |
| Sedimentation property test | A | A | A | A | A | A |

[Table 18]

| | Example | | | | Comparative Example |
|---|---|---|---|---|---|
| | 49 | 50 | 51 | 52 | 6 |
| Particle size change test | A | A | A | A | D |
| Sedimentation property test | A | A | A | A | C |
| Re-dispersibility test | A | A | A | A | A |

As is apparent from the results of Tables 17 and 18, all of the aqueous orange inks of Examples 43 to 52 prepared using the aqueous dispersions of Examples 33 to 42 had no significant increase in particle diameter after the

storage at high temperature, thus containing few coarse particles, and having good sedimentation properties and excellent storage stability. The aqueous orange inks of Examples 49 to 52 were also excellent in re-dispersibility. On the other hand, the aqueous orange ink of Comparative Example 6 prepared using the aqueous dispersion liquid of Comparative Example 5 was inferior in storage stability to the aqueous orange inks of Examples 43 to 52.

<Examples 53 to 58: Preparation of aqueous orange inks 30 to 35>

Each of the aqueous dispersion liquids 3, 19, and 25 to 28 obtained in Examples 3, 33, and 39 to 42 and the components described in Table 19 below were mixed and stirred for 30 minutes, and then filtered through a glass fiber filter paper GC-50 (manufactured by Advantec Ltd., pore diameter of the filter: 0.5 μm) to obtain aqueous black inks 1 to 6. In Table 19, numerical values of the respective components indicate the number of parts added.

[Table 19]

| Composition of aqueous orange ink | | Example | | | | | |
|---|---|---|---|---|---|---|---|
| | | 53 | 54 | 55 | 56 | 57 | 58 |
| | | Orange ink 30 | Orange ink 31 | Orange ink 32 | Orange ink 33 | Orange ink 34 | Orange ink 35 |
| Aqueous dispersion liquid 3 | | 20.0 | | | | | |
| Aqueous dispersion liquid 19 | | | 20.0 | | | | |
| Aqueous dispersion liquid 25 | | | | 20.0 | | | |
| Aqueous dispersion liquid 26 | | | | | 20.0 | | |
| Aqueous dispersion liquid 27 | | | | | | 20.0 | |
| Aqueous dispersion liquid 28 | | | | | | | 20.0 |
| Other components | Glycerin | 15 | 15 | 15 | 15 | 15 | 15 |
| | Propylene glycol | 10 | 10 | 10 | 10 | 10 | 10 |
| | Triethylene glycol monomethylether | 5 | 5 | 5 | 5 | 5 | 5 |
| | BYK-348 | 0.8 | 0.8 | 0.8 | 0.8 | 0.8 | 0.8 |
| | TEA-80 | 0.1 | 0.1 | 0.1 | 0.1 | 0.1 | 0.1 |
| | Proxel GXL | 0.1 | 0.1 | 0.1 | 0.1 | 0.1 | 0.1 |
| | Ion-exchanged water | Balance | Balance | Balance | Balance | Balance | Balance |
| Total | | 100 | 100 | 100 | 100 | 100 | 100 |

<Evaluation>

Each of the aqueous orange inks 30 to 35 prepared as described above was filled into an inkjet printer (PX-504A, manufactured by EPSON Co., Ltd.), and intermediate recording media in each of which a single-color solid image of 100% Duty was printed were obtained, using TRNASJECT EcoII 8385 (basis weight: 95 g/$m^2$) as an intermediate recording medium. An ink adhering surface of each of the obtained intermediate recording media and polyester fabric (Teijin Tropical) were superimposed on each other, and then heat treatment was performed using a tabletop automatic flat pressing machine (AF-65TEN manufactured by Asahi Garment Machinery Co., Ltd.) under a condition of 200°C for 30 seconds, whereby dyed products that were dyed by the sublimation transfer method were obtained. All of the dyed products could have desired colors.

Furthermore, using the aqueous orange inks 30 to 35 prepared as described above, the particle size change test and the sedimentation property test were performed. Results are indicated in Table 20 below.

[Table 20]

| | Example | | | | | |
|---|---|---|---|---|---|---|
| | 53 | 54 | 55 | 56 | 57 | 58 |
| Particle size change test | A | A | A | A | A | A |
| Sedimentation property test | A | A | A | A | A | A |

As is apparent from the results shown in Table 20, all of the aqueous orange inks of Examples 53 to 58 had no significant increase in particle diameter at the storage at high temperature, thus containing few coarse particles, and having good sedimentation properties and excellent storage stability.

<Examples 59 to 64: Preparation of aqueous black inks 1 to 6>

The aqueous dispersion liquids 3, 19, and 25 to 28 obtained in Examples 3, 33, and 39 to 42 and the components described in Table 21 below were mixed and stirred for 30 minutes, and then filtered through a glass fiber filter paper GC-50 (ADVANTEC Co., Ltd., pore size of a filter: 0.5 μm) to prepare aqueous black inks 1 to 6, respectively. In Table 21, the numerical value of each component indicates the number of parts added.

[Table 21]

| Composition of aqueous black ink | | Example | | | | | |
|---|---|---|---|---|---|---|---|
| | | 59 | 60 | 61 | 62 | 63 | 64 |
| | | Black ink 1 | Black ink 2 | Black ink 3 | Black ink 4 | Black ink 5 | Black ink 6 |
| Aqueous dispersion liquid 3 | | 15.0 | | | | | |
| Aqueous dispersion liquid 19 | | | 15.0 | | | | |
| Aqueous dispersion liquid 25 | | | | 15.0 | | | |
| Aqueous dispersion liquid 26 | | | | | 15.0 | | |
| Aqueous dispersion liquid 27 | | | | | | 15.0 | |
| Aqueous dispersion liquid 28 | | | | | | | 15.0 |
| Y54 dispersion liquid | | 5.0 | 5.0 | 5.0 | 5.0 | 5.0 | 5.0 |
| B360 dispersion liquid | | 25.0 | 25.0 | 25.0 | 25.0 | 25.0 | 25.0 |
| Or60 dispersion liquid | | 10.0 | 10.0 | 10.0 | 10.0 | 10.0 | 10.0 |
| Other components | Glycerin | 15 | 15 | 15 | 15 | 15 | 15 |
| | Propylene glycol | 10 | 10 | 10 | 10 | 10 | 10 |
| | Triethylene glycol monomethylether | 5 | 5 | 5 | 5 | 5 | 5 |
| | BYK-348 | 0.8 | 0.8 | 0.8 | 0.8 | 0.8 | 0.8 |
| | TEA-80 | 0.1 | 0.1 | 0.1 | 0.1 | 0.1 | 0.1 |
| | Proxel GXL | 0.1 | 0.1 | 0.1 | 0.1 | 0.1 | 0.1 |
| | Ion-exchanged water | Balance | Balance | Balance | Balance | Balance | Balance |
| Total | | 100 | 100 | 100 | 100 | 100 | 100 |

<Evaluation>

Each of the aqueous black inks 1 to 6 prepared as described above was filled into an inkjet printer (PX-504A, manufactured by EPSON Co., Ltd.), and intermediate recording media in each of which a single-color solid image of 100% Duty was printed were obtained, using TRANSJET EcoII 8385 (basis weight:95 g/$m^2$) as an intermediate recording

medium. An ink adhering surface of each of the obtained intermediate recording media and polyester fabric (Teijin Tropical) were superimposed on each other, and then heat treatment was performed using a tabletop automatic flat pressing machine (AF-65TEN manufactured by Asahi Garment Machinery Co., Ltd.) under a condition of 200°C for 30 seconds, whereby dyed products that were dyed by the sublimation transfer method were obtained.

For each of the dyed products obtained, the dye density was measured using a spectroscopic colorimeter eXact (manufactured by X-Rite Inc.). Colorimetry was carried out under the conditions of a D65 light source, a viewing angle of 2° and status I. The reflectance $R_\lambda$ at 400 to 700 nm for each of the dyed products was determined and Kubelka-Munk equation $K/S = (1-R_\lambda)^2/2R_\lambda$ was used to calculate K/S. Then, sigma K/S value, which is a sum of K/S values at each wavelength, was calculated. As a result, all of the aqueous black inks had the sigma K/S value of 400 or more, indicating a good color development.

Furthermore, using the aqueous black inks 1 to 6 prepared as described above, the above-mentioned particle size change test and the sedimentation property test were performed. Results are indicated in Table 22 below.

[Table 22]

| | Example | | | | | |
|---|---|---|---|---|---|---|
| | 59 | 60 | 61 | 62 | 63 | 64 |
| Particle size change test | A | A | A | A | A | A |
| Sedimentation property test | A | A | A | A | A | A |

As is apparent from the results shown in Table 22, all of the aqueous black inks of Examples 59 to 64 had no significant increase in particle diameter at the storage at high temperature, thus containing few coarse particles, and having good sedimentation properties and excellent storage stability.

## Claims

**1.** A colored dispersion liquid, comprising:

(A) C.I. Disperse Orange 25, (B) at least one coloring matter selected from a coloring matter represented by the following formula (1) and a coloring matter represented by the following formula (2), and water,

wherein a content of the (B) coloring matter is less than 20 parts by mass, when a total content of the (A) C.I. Disperse Orange 25 and the (B) coloring matter is 100 parts by mass,
the formula (1) is

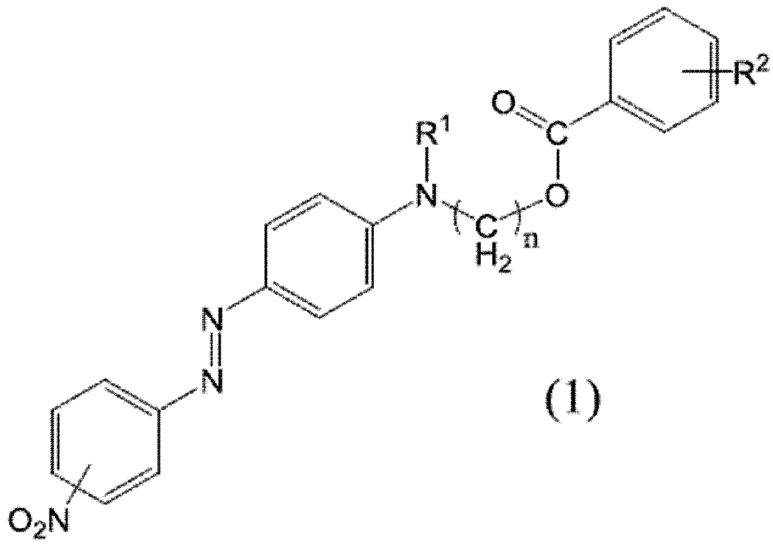

(1)

wherein in the formula (1), $R^1$ and $R^2$ each independently represent a hydrogen atom, a C1 to C7 alkyl

group which may have a substituent, and n is an integer of 1 to 7, and
the formula (2) is

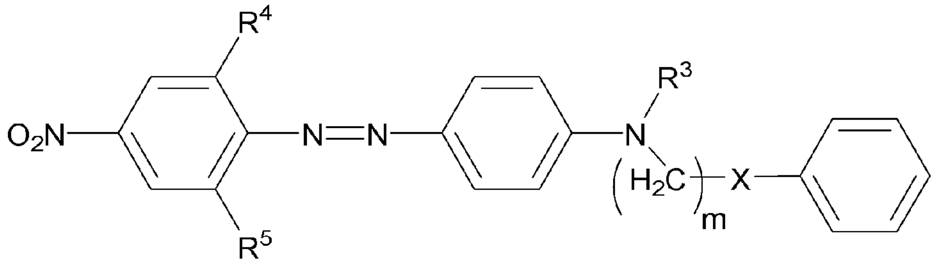

(2)

wherein in the formula (2), $R^3$ represents a hydrogen atom or a C1 to C7 alkyl group which may have a substituent, $R^4$ and $R^5$ each independently represent a hydrogen atom or a halogen atom, X represents an oxygen atom, -OCONH-, -OCO-, or $-OCOCH_2-$, and m represents an integer of 1 to 7.

2. The colored dispersion liquid according to claim 1, wherein the content of the (B) coloring matter is 0.1 to 15 parts by mass, when the total content of the (A) C.I. Disperse Orange 25 and the (B) coloring matter is 100 parts by mass.

3. The colored dispersion liquid according to claim 1, wherein the content of the (B) coloring matter is 0.5 to 5 parts by mass, when the total content of the (A) C.I. Disperse Orange 25 and the (B) coloring matter is 100 parts by mass.

4. The colored dispersion liquid according to any one of claims 1 to 3, wherein the coloring matter represented by the formula (1) is C.I. Disperse Orange 73.

5. The colored dispersion liquid according to any one of claims 1 to 4, further comprising a dispersant.

6. The colored dispersion liquid according to claim 5, wherein the dispersant comprises at least one selected from the group consisting of a styrene-(meth)acrylic copolymer, a formalin condensate of an aromatic sulfonic acid or a salt thereof, polyoxyethylene arylphenyl ether, polyoxyethylene arylphenyl ether sulfate, and polyoxyethylene naphthyl ether.

7. The colored dispersion liquid according to claim 6, wherein the formalin condensate of an aromatic sulfonic acid or a salt thereof comprises a formalin condensate of sodium naphthalene sulfonate or a salt thereof.

8. The colored dispersion liquid according to claim 6 or 7, wherein the formalin condensate of an aromatic sulfonic acid or a salt thereof comprises a formalin condensate of creosote oil sulfonic acid or a salt thereof.

9. The colored dispersion liquid according to any one of claims 6 to 8, wherein the polyoxyethylene arylphenyl ether is polyoxyethylene styrylphenyl ether, and the polyoxyethylene arylphenyl ether sulfate is polyoxyethylene styrylphenyl ether sulfate.

10. The colored dispersion liquid according to any one of claims 6 to 9, wherein the dispersant further comprises a phytosterol compound.

11. The colored dispersion liquid according to any one of claims 1 to 10, further comprising a yellow dye, a blue dye, and an orange dye different from the (A) C.I. Disperse Orange 25 and the (B) coloring matter.

12. A recording medium, comprising the colored dispersion liquid according to any one of claims 1 to 11 adhered thereto.

13. The recording medium according to claim 12, wherein the recording medium is a hydrophobic fiber.

14. A method for textile printing of a hydrophobic fiber, comprising:

printing by adhering a droplet of the colored dispersion liquid according to any one of claims 1 to 11 to an intermediate recording medium to obtain a recorded image, and
transferring the recorded image to the hydrophobic fiber by contacting the hydrophobic fiber with a surface of

the intermediate recording medium on which the colored dispersion liquid is adhered, followed by heat treatment.

**Amended claims under Art. 19.1 PCT**

1. (Amended) A colored dispersion liquid, comprising:

(A) C.I. Disperse Orange 25, (B) at least one coloring matter selected from a coloring matter represented by the following formula (1) and a coloring matter represented by the following formula (2), and water,

wherein a content of the (B) coloring matter is less than 10 parts by mass, when a total content of the (A) C.I. Disperse Orange 25 and the (B) coloring matter is 100 parts by mass,
the formula (1) is

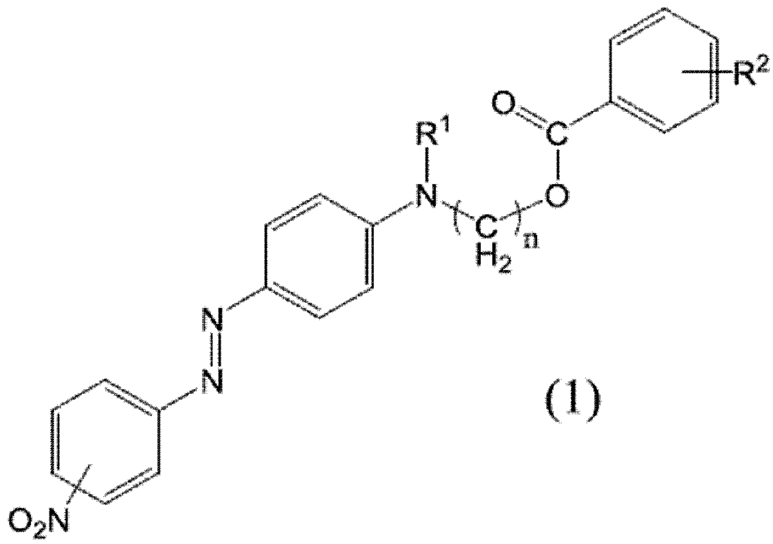

(1)

wherein in the formula (1), $R^1$ and $R^2$ each independently represent a hydrogen atom, a C1 to C7 alkyl group which may have a substituent, and n is an integer of 1 to 7, and
the formula (2) is

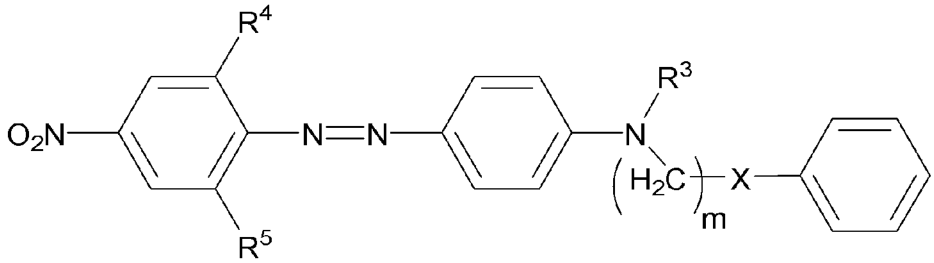

(2)

wherein in the formula (2), $R^3$ represents a hydrogen atom or a C1 to C7 alkyl group which may have a substituent, $R^4$ and $R^5$ each independently represent a hydrogen atom or a halogen atom, X represents an oxygen atom, -OCONH-, -OCO-, or $-OCOCH_2-$, and m represents an integer of 1 to 7.

2. (Amended) The colored dispersion liquid according to claim 1, wherein the content of the (B) coloring matter is 0.1 part by mass or more and less than 10 parts by mass, when the total content of the (A) C.I. Disperse Orange 25 and the (B) coloring matter is 100 parts by mass.

3. The colored dispersion liquid according to claim 1, wherein the content of the (B) coloring matter is 0.5 to 5 parts by mass, when the total content of the (A) C.I. Disperse Orange 25 and the (B) coloring matter is 100 parts by mass.

4. The colored dispersion liquid according to any one of claims 1 to 3, wherein the coloring matter represented by the formula (1) is C.I. Disperse Orange 73.

5. The colored dispersion liquid according to any one of claims 1 to 4, further comprising a dispersant.

6. The colored dispersion liquid according to claim 5, wherein the dispersant comprises at least one selected from the group consisting of a styrene-(meth)acrylic copolymer, a formalin condensate of an aromatic sulfonic acid or a salt thereof, polyoxyethylene arylphenyl ether, polyoxyethylene arylphenyl ether sulfate, and polyoxyethylene naphthyl ether.

7. The colored dispersion liquid according to claim 6, wherein the formalin condensate of an aromatic sulfonic acid or a salt thereof comprises a formalin condensate of sodium naphthalene sulfonate or a salt thereof.

8. The colored dispersion liquid according to claim 6 or 7, wherein the formalin condensate of an aromatic sulfonic acid or a salt thereof comprises a formalin condensate of creosote oil sulfonic acid or a salt thereof.

9. The colored dispersion liquid according to any one of claims 6 to 8, wherein the polyoxyethylene arylphenyl ether is polyoxyethylene styrylphenyl ether, and the polyoxyethylene arylphenyl ether sulfate is polyoxyethylene styrylphenyl ether sulfate.

10. The colored dispersion liquid according to any one of claims 6 to 9, wherein the dispersant further comprises a phytosterol compound.

11. The colored dispersion liquid according to any one of claims 1 to 10, further comprising a yellow dye, a blue dye, and an orange dye different from the (A) C.I. Disperse Orange 25 and the (B) coloring matter.

12. A recording medium, comprising the colored dispersion liquid according to any one of claims 1 to 11 adhered thereto.

13. The recording medium according to claim 12, wherein the recording medium is a hydrophobic fiber.

14. A method for textile printing of a hydrophobic fiber, comprising:

printing by adhering a droplet of the colored dispersion liquid according to any one of claims 1 to 11 to an intermediate recording medium to obtain a recorded image, and
transferring the recorded image to the hydrophobic fiber by contacting the hydrophobic fiber with a surface of the intermediate recording medium on which the colored dispersion liquid is adhered, followed by heat treatment.

**Statement under Art. 19.1 PCT**

Original claim 1 1 specifies that
a content of the (B) coloring matter is less than 20 parts by mass, when a total content of the (A) C.I. Disperse Orange 25 and the (B) coloring matter is 100 parts by mass.

The above-described content of the (B) coloring matter is amended to "less than 10 parts by mass". This amendment is based on the disclosure of paragraph [0026] of the originally filed Description.

Original Claim 2 specifies that
the content of the (B) coloring matter is 0.1 to 15 parts by mass, when the total content of the (A) C.I. Disperse Orange 25 and the (B) coloring matter is 100 parts by mass.

The above-described content of the (B) coloring matter is amended to "0.1 part by mass or more and less than 10 parts by mass". This amendment is based on the disclosure of paragraph [0026] of the originally filed Description.

## INTERNATIONAL SEARCH REPORT

International application No.
PCT/JP2020/019782

A. CLASSIFICATION OF SUBJECT MATTER

C09B 29/085(2006.01)i; D06P 1/04(2006.01)i; D06P 1/18(2006.01)i; D06P 5/24(2006.01)i; D06P 5/26(2006.01)i; C09B 67/20(2006.01)i; C09B 67/22(2006.01)i; C09B 67/44(2006.01)i; C09B 67/46(2006.01)i

FI: C09B67/44 A; C09B67/22 B; D06P5/26; C09B67/20 L; C09B29/085 E; D06P1/18; D06P1/04; D06P5/24; C09B67/46 A

According to International Patent Classification (IPC) or to both national classification and IPC

B. FIELDS SEARCHED

Minimum documentation searched (classification system followed by classification symbols)

C09B29/085; D06P1/04; D06P1/18; D06P5/24; D06P5/26; C09B67/20; C09B67/22; C09B67/44; C09B67/46

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 10-251534 A (DAISUTAA JAPAN KK) 22.09.1998 (1998-09-22) comparative example 3, paragraphs [0014]-[0016] | 1-2, 4-9, 12-14 |
| X | CN 1995154 A (ZHEJIANG LONGSHENG GROUP CO., LTD.) 11.07.2007 (2007-07-11) claims 1, 6, example 4 | 1-8, 11-14 |
| Y | claims 1, 6, example 4 | 8-10 |
| Y | JP 59-27960 A (KAO SEKKEN KABUSHIKI KAISHA) 14.02.1984 (1984-02-14) claim 1 | 8 |
| Y | JP 61-194279 A (KAO CORP.) 28.08.1986 (1986-08-28) claim 1, table 1, F | 9 |
| Y | JP 2017-145350 A (TOYO INK SC HOLDINGS CO., LTD.) 24.08.2017 (2017-08-24) claim 1 | 10 |

☒ Further documents are listed in the continuation of Box C.  ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 27 July 2020 (27.07.2020) | 04 August 2020 (04.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/019782

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-120932 A (DAISUTAA JAPAN KK) 12.05.1998 (1998-05-12) entire text | 1-14 |
| A | CN 106752080 A (ZHEJIANG RUNTU INST CO., LTD.) 31.05.2017 (2017-05-31) entire text | 1-14 |

Form PCT/ISA/210 (continuation of second sheet) (January 2015)

**INTERNATIONAL SEARCH REPORT**
Information on patent family members

International application no.
PCT/JP2020/019782

| Patent Documents referred in the Report | Publication Date | Patent Family | Publication Date |
|---|---|---|---|
| JP 10-251534 A | 22 Sep. 1998 | (Family: none) | |
| CN 1995154 A | 11 Jul. 2007 | (Family: none) | |
| JP 59-27960 A | 14 Feb. 1984 | (Family: none) | |
| JP 61-194279 A | 28 Aug. 1986 | (Family: none) | |
| JP 2017-145350 A | 24 Aug. 2017 | (Family: none) | |
| JP 10-120932 A | 12 May 1998 | (Family: none) | |
| CN 106752080 A | 31 May 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005121263 A